# EUROPEAN PATENT APPLICATION

(11) **EP 3 070 590 A1**
(43) Date of publication of application: **21.09.2016**
(21) Application number: 16159253.0
(22) Date of filing: 08.03.2016
(51) Int. Cl.: G06F 3/0489, G06F 3/01, H04N 5/44, H04N 21/422, G06F 3/0346

(54) **REMOTE CONTROLLER AND METHOD FOR CONTROLLING SCREEN OF DISPLAY APPARATUS**

(30) Priority: 10.03.2015 KR 20150033442
(71) Applicant: Samsung Electronics Co., Ltd., Gyeonggi-do 16677 (KR)
(72) Inventor: CHOI, Myung-kwan, Gyeonggi-do (KR); LEE, Sang-hyup, Gyeonggi-do (KR)
(74) Representative: Walaski, Jan Filip

(57) **Abstract**

A remote controller and a method for controlling a screen of the remote controller are provided, in which the remote controller may change the broadcast channel of a display apparatus by using a pointer and a virtual key pad.

## Description

The present invention relates to a remote controller and a method for controlling a screen of a display apparatus thereof, more specifically, to a remote controller configured to change a channel of the display apparatus by using a pointer of the remote controller and a method for controlling a screen of the display apparatus thereof.

As methods of interface between a display apparatus and a user, a panel key of the display apparatus or a remote controller may be used in many cases. With the technological development, functions of the display apparatus have become complicated and diversified. Thus, the contents, such as video downloaded externally or the internet browsing, may be implemented.

However, a user cannot easily control functions and operations of the display apparatus which become complicated and diversified, by using a remote controller h having a limited number of keys.

More specifically, when the display apparatus outputs a broadcast, a user cannot easily change a broadcast channel by using the aforementioned remote controller.

Exemplary embodiments of the present disclosure overcome the above disadvantages and other disadvantages not described above. However, the exemplary embodiments are not required to overcome the disadvantages described above, and an exemplary embodiment of the present disclosure may not overcome any of the problems described above.

An objective of an exemplary embodiment is to provide a remote controller that changes a broadcast channel by using a pointer and a virtual key pad displayed on a whole screen of a display apparatus, and a method for controlling the screen of the display apparatus thereof.

According to an exemplary embodiment, the remote controller includes a first key configured to cause a pointer to appear on a screen of a display apparatus, a second key configured to cause one area to be selected among a plurality of divided areas of the display apparatus, a sensor configured to detect a movement of the remote controller moving the pointer, a communicator connected with the display apparatus, and a controller configured to control the first key, the second key, the sensor and the communicator. The controller may transmit a first control information corresponding to pressing of the first key and a second control information corresponding to the movement of the pointer to the display apparatus through the communicator, and transmit a third control information corresponding to pressing of the second key to the display apparatus through the communicator.

According to an embodiment, a method for controlling a screen of a remote controller is provided, which may include transmitting a first control information corresponding to selecting of a first key causing a pointer to appear on a screen of a display apparatus to the display apparatus, transmitting a second control information corresponding to a movement of the remote controller moving the pointer to the display apparatus, and transmitting a third control information corresponding to selecting of one divided area among a plurality of divided areas which virtually divide the whole screen of the display apparatus with the pointer to the display apparatus. The plurality of divided areas may correspond to the numbers displayed on the screen of the display apparatus.

According to an embodiment, a display apparatus is provided, which may include a display configured to output a broadcast, a communicator configured to receive control information from a remote controller, and a controller configured to control the display and the communicator. The controller may display a pointer on the display in response to the received first control information, move the displayed pointer in response to the received second control information, and select one divided area among a plurality of divided areas which virtually divide the display, in response to the received third control information, and the control information may include the first, the second and the third control information.

According to an embodiment, the display may respectively output different channels through a plurality of divided screen areas, and the controller may display the pointer on one divided screen area among a plurality of the divided screen areas of the display in response to the received first control information, move the pointer in response to the received second control information, and select one divided area among a plurality of the divided areas which virtually divide one divided screen area of the display in response to the received third control information.

Further, the display may display a first channel on a main screen and display a second channel on a sub screen, and the controller may display the pointer on one of the main screen and the sub screen in response to the received first control information, move the pointer in response to the received second control information, and in response to the received third control information, select one divided area among a plurality of the divided areas which virtually divide the main screen or the sub screen.

According to an embodiment, a remote controller and a method for controlling a screen of the remote controller are provided, which changes the broadcast channel by using the pointer and the virtual key pad displayed on the whole screen of the display apparatus.

Further, the remote controller and a method for controlling the screen of the remote controller are provided, which changes the broadcast channel by using the pointer key and the virtual key pad displayed on the whole screen of the display apparatus in response to selecting of the one divided area among a plurality of virtually divided areas.

Further, a remote controller and a method for controlling a screen of the remote controller are provided, which provides at least one feedback among auditory feedback and visual feedback of the display apparatus in response to selecting of one divided area among a plurality of virtually divided areas.

Further, a remote controller and a method for controlling the screen of the remote controller are provided, which reduces display time of virtual key pad on the screen of the display apparatus, when the virtual key pad is displayed on the whole screen of the display apparatus in response to selecting of one divided area among a plurality of virtually divided areas on the whole screen of the display apparatus.

According to the above various embodiments, a remote controller and a method for controlling a screen of the remote controller are provided, which changes the broadcast channel by using a pointer and a virtual key pad displayed on the whole screen of the display apparatus.

The above and/or other aspects of the present inventive concept will be more apparent by describing certain exemplary embodiments of the present inventive concept with reference to the accompanying drawings, in which:
FIG. 1A is a diagram illustrating operations between a remote controller and a display apparatus according to an exemplary embodiment;
FIG. 1B is a perspective view illustrating a remote controller according to an exemplary embodiment;
FIG. 2 is a block diagram illustrating a remote controller and a display apparatus according to an exemplary embodiment;
FIG. 3 is a flowchart explaining a method for controlling a screen of a display apparatus regarding a remote controller according to an exemplary embodiment;
FIG. 4 is a sequence diagram illustrating the method for controlling a screen of a display apparatus regarding a remote controller according to an exemplary embodiment;
FIGS. 5A to 5G are diagrams of examples regarding a method for controlling a screen of a remote controller according to an exemplary embodiment;
FIGS. 6A to 6D are diagrams of examples regarding a method for controlling a screen of a remote controller according to an exemplary embodiment; and
FIGS. 7A to 7K are diagrams of examples regarding a method for controlling a screen of a remote controller according to an exemplary embodiment.

Exemplary embodiments of the present disclosure will now be described in greater detail with reference to the accompanying drawings.

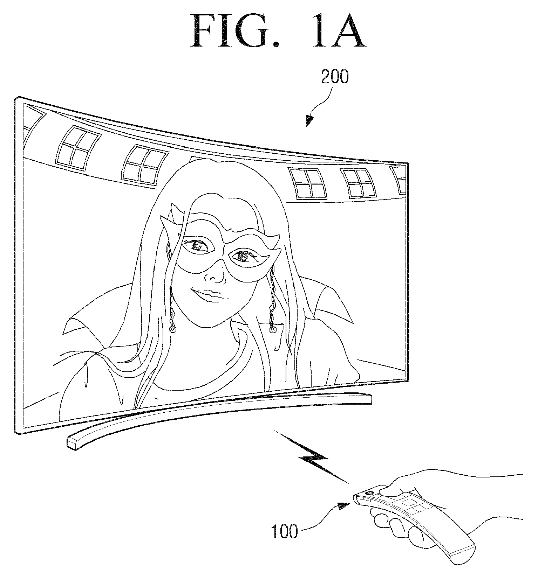

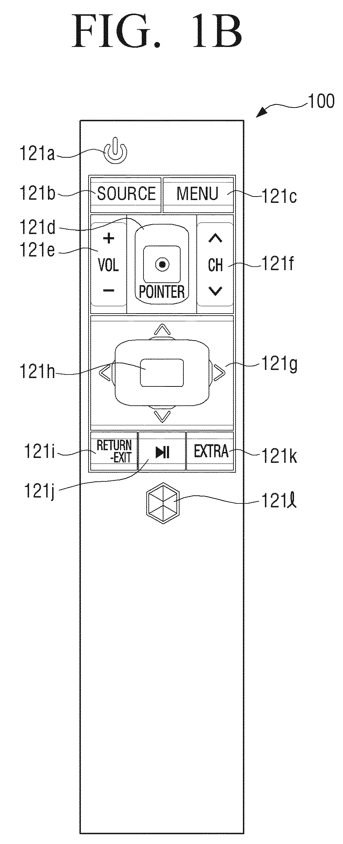

According to an exemplary embodiment, "selecting a key (or button)" of a remote controller 100 of FIG. 1 may be used as a term for indicating, for example, pressing of the key (or button) or touching of the key (or button). A user input may be used as a term describing that a user selects a key (or button), press a key (or button), or touch a key. In addition, the user input may also represent touch gestures of a user, user voice or user motion. Further, touching (including the touch gestures) on the remote controller 110 may be inputted by a user body or an inputting pen (e.g., stylus pen).

According to an embodiment, a screen of a display apparatus may be used as a term including a display of the display apparatus.

In describing the drawings, the same reference numerals are used to refer to elements performing substantially the same functions.

FIG. 1A is a diagram illustrating operations between the remote controller and the display apparatus according to an exemplary embodiment.

Referring to FIG. 1A, the remote controller and the display apparatus are illustrated. The remote controller 100 may control the display apparatus 200 by transmitting a control command through the near field communication including infrared or Bluetooth. A user may control functions of the display apparatus 200 (e.g., power on/off, channel change, volume adjustment or content reproduction) by using the voice recognition through the key (including the button), a touch pad, a microphone, or the motion recognition through a sensor. For example, a user may control the functions of the display apparatus 200 (e.g., power on/off, channel change, volume adjustment or content reproduction) with the motion recognition through a camera attached on the display apparatus.

A user may change a channel of the display apparatus 200 which is outputting the broadcast, by moving the remote controller 100. Further, a user may input the channel number corresponding to the channel of the display apparatus 200, by moving the remote controller 100.

A user may display various contents (e.g., TV broadcast, smart hub screen, web page, screen of application shortcut icons corresponding to the available applications) by dividing the screen of the display apparatus with the remote controller 100. The screen division of the display apparatus 200 may include the two-sectioned division, three-sectioned division, four-sectioned division, five-sectioned division, or more, for example. A user may divide the screen of the display to be two-sectioned (e.g., horizontal two sections or vertical two sections) and respectively output different contents by using the remote controller 100. A user may change the channel on the divided screen of the display apparatus 200 by moving the remote controller 100. A user may input the channel number corresponding to the channel on the divided screen of the display apparatus 200 by moving the remote controller 100.

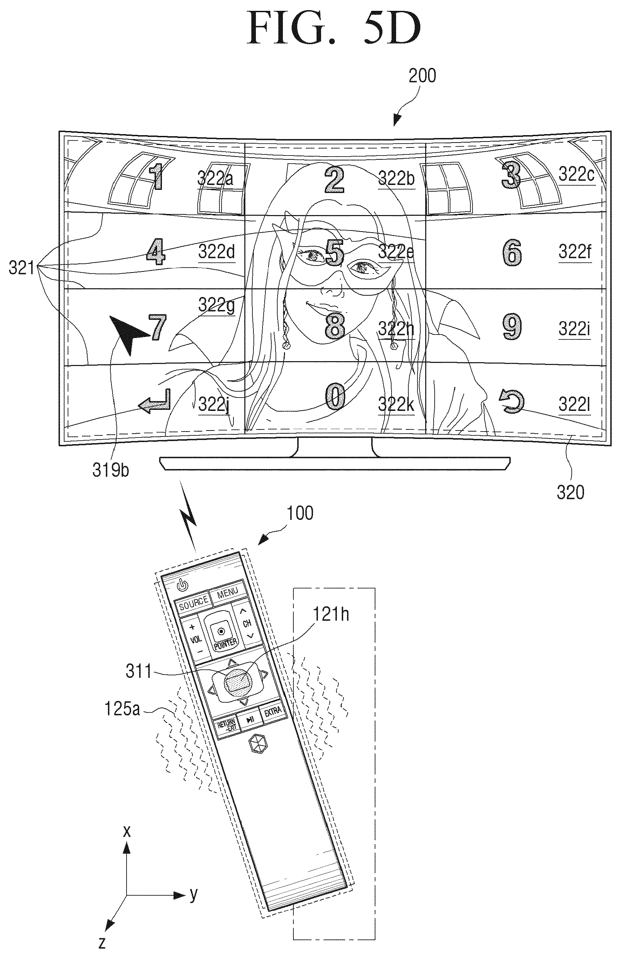

The display apparatus 200 may display a virtual key pad 320 of FIG. 5D on the screen of the display apparatus 200 correspondingly to the movement of the remote controller 100.

Whether or not the display apparatus 200 is capable of displaying the virtual key pad may be confirmed by checking items included in display apparatus information of the display apparatus 200. The items of the apparatus information may include the outputting resolution of the display apparatus 200, whether the screen is curved or flat, the display method, the diagonal distance of the screen, the horizontal/vertical distance of the screen (or the display apparatus 200), or the horizontal/vertical ratio of the screen, for example. Further, the apparatus information may indicate information corresponding to the manual of the display apparatus 200 or the specification disclosed on the web page.

The display apparatus information may be stored in a storage 280 of the display apparatus 200. Further, the display apparatus information may be downloaded externally from the display apparatus 200 through the communicator 230 according to the control of a controller 210.

The outputting resolution may include high definition (HD), full HD, ultra HD, or more than the above levels of the resolution, for example. The information as to whether the screen is curved or flat may include information of one of the curved and the flat screen of the display apparatus 200. The display method may include liquid crystal display (LCD) method, organic light emitting diodes (OLED) method, active matrix organic light-emitting diodes (AMOLED) method, plasma display panel (PDP) method, or quantum dot (QD) method. Video and/or text information that can be displayed may be different according to the display method, which can be easily understood by a person skilled in the art.

The diagonal distance of the screen may include 66 cm, 80 cm, 101 cm, 152 cm, 189 cm, 200 cm or greater, for example. The horizontal/vertical distance of the screen (or the display apparatus 200) may include 643.4 mm x 396.5 mm, 934. o mm x 548.6 mm, 1,670.2 mm x 962.7 mm, and 2,004.3 mm x 1,635.9 mm, for example. Further, the horizontal/vertical ratio of the screen may include 4:3, 16:9, 16:10, 21:9 and 21:10, for example.

The items included in the display apparatus information may be modified correspondingly to the performance or the constitution of the display apparatus 200, which can be easily understood by a person skilled in the art.

FIG. 1B is a perspective view illustrating the remote controller according to an exemplary embodiment.

Referring to FIG. 1B, the remote controller 100 may include one or two or more keys (or buttons) corresponding to the functions of the display apparatus 200. One or two or more keys (or buttons) may include physical buttons or touch buttons. Further, the remote controller 100 may include single function keys (e.g., 121a to 121l) corresponding to the functions performed in the display apparatus 200 and/or multi function keys.

The single function keys of the remote controller 100 (e.g., power key 121a and pointer key 121d) may be the keys for controlling of one function among the various functions performed in the display apparatus 200. The keys of the remote controller 100 may be single function keys in most cases.

The multi function keys of the remote controller 100 (e.g., color keys (not illustrated)) may be the keys for controlling of additional functions provided (or established) differently according to the functions performed in the display apparatus 200. The color keys (not illustrated) may include the red key (not illustrated), the green key (not illustrated), the yellow key (not illustrated), and the blue key (not illustrated). The arrangement order of the color keys (not illustrated) may be modified, and a number of the color keys (not illustrated) may be added, modified or deleted in response to the functions of the display apparatus 200.

In response to a number of the divided areas on the screen of the display apparatus 200, a number of the color keys in the remote controller 100 may be modified. For example, when the divided areas of the screen of the display apparatus 200 are two, the color keys allocated by the remote controller 100 may be the red key and the green key. When a user selects the yellow key or the blue key, the display apparatus 200 having the two divided areas of the screen may not be controlled with the received control information respectively corresponding to the yellow key and the blue key.

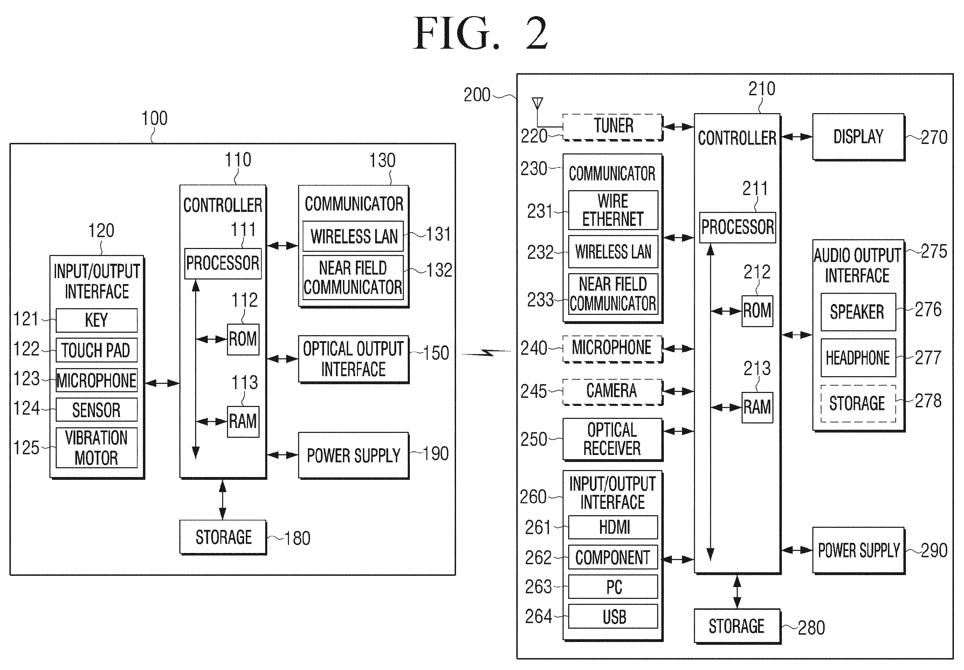

FIG. 2 is a block diagram illustrating the remote controller and the display apparatus according to an exemplary embodiment.

Referring to FIG. 2, the remote controller 100 is capable of remotely controlling the display apparatus 200. The remote controller 100 includes a controller 110, an input/output interface 120, a communicator 130, an optical output interface 150, a storage 180, and an power supply 190. In an embodiment, the remote controller 100 may include only one of the communicator 130 and the optical output interface 150. Further, the remote controller 100 may not include the storage 180.

The term "remote controller" may be regarded as an electronic apparatus capable of controlling a display apparatus. In this embodiment, the remote controller 100 may include the electronic apparatus in which an application could be installed for the controlling the display apparatus 200. The remote controller 100 may include a touch screen or a display panel without a touch panel, for example. The remote controller 100 arranging the display may include a portable phone, a smart phone, a tablet personal computer (PC), a note PC, another display apparatus or a home appliance (e.g., refrigerator, washing machine or cleaning device). A user may control the display apparatus 200 by using the function keys (e.g., channel keys) through the graphic user interface (GUI) provided by the application of the remote controller 100.

In addition, the remote controller 110 may include a processor 111, ROM 112 (or non-volatile memory) storing a control program for the controlling of the remote controller 100, and RAM 113 (or volatile memory) storing signals or data inputted externally from the remote controller 100 and used as storing area regarding the various operations performed in the remote controller 100.

The controller 110 may control general operations of the remote controller 100 and signal flows between the internal units 120-190, and process data. The controller 110 may control the power supply 190 to supply power to the internal units 120-180. Further, the processor 111, ROM 112, and RAM 113 may be connected to each other through a bus.

The controller 110 may control the first key displaying a pointer on the screen of the display apparatus 200, the second key, a sensor 124 detecting the movement of the remote controller to move the pointer, and the communicator 130 outputting control information, transmit the first control information corresponding to pressing of the first key and the second control information corresponding to the movement through the communicator, and transmit the third control information corresponding to pressing of the second key which selects one area among a plurality of the divided areas which virtually divide the whole screen of the display apparatus 200.

The controller 110 may transmit the first control information corresponding to selecting of the pointer key 121d to the display apparatus 200 by using the communicator 130 or the optical output interface 150.

The controller 110 may transmit the second control information corresponding to the detected movement of the remote controller 100 to the display apparatus 200 by using the communicator 130 or the optical output interface 150.

The controller 110 may receive from the display apparatus 200 the third control information corresponding to the pointer's moving across the area dividing lines.

The controller 110 may transmit the fourth control information corresponding to selecting the enter key 121h to the display apparatus 200 by using the communicator 130 or the optical output interface 150.

The controller 110 may transmit the fourth control information corresponding to additional selecting of the pointer key 121d to the display apparatus 200 by using the communicator 130 or the optical output interface 150.

The controller 110 may transmit at least one control information among the first, the second and the fourth control information to the display apparatus 200 through one of the communicator 130 and the optical output interface 150.

The controller 110 may provide at least one feedback among tactile feedback (e.g., using a vibration motor) and the auditory feedback (e.g., using a speaker) corresponding to the received third control information.

According to an embodiment, the controller 110 may include the processor 111, ROM 112 and RAM 113 of the remote controller 100.

The input/output interface 120 may include the button 121 or the touch pad 122 which receives the user input (e.g., touching or pressing) to control the display apparatus 200. The input/output interface 120 may include a microphone 123 receiving the uttered user voice, the sensor 124 detecting the movement of the remote controller 100, and the vibration motor 125 providing tactile feedback.

The key 121 may include the keys 121a to 121l of FIG. 1B. The touch pad 122 (not illustrated in FIG. 1B) may receive a user touch or a user touch gesture. The touch pad 122 may be implemented on the area where the directional key 121g and the enter key 121h are positioned. Further, the touch pad 122 may be positioned on the front of the remote controller 100 where the keys 121a-121l are not positioned.

The sensor 124 may include the motion sensor detecting the movement of the remote controller 100, the gyro sensor detecting the direction of the remote controller 100 by using the rotating inertia, the acceleration sensor detecting the acceleration of the three axes (e.g., X, Y, and Z axes) of the remote controller 100, and/or the gravity sensor detecting the applied direction of the gravity. The sensor 124 may respectively measure the movement, acceleration and the gravity direction of the remote controller 100.

The vibration motor 125 may convert the electrical signal into the mechanical signal according to the control of the controller 110. For example, the vibration motor 125 may include a linear vibration motor, a bar type vibration motor, a coin type vibration motor or a piezo vibration motor. When the third control information is received from the display apparatus 200, the controller 110 of the remote controller 100 may operate the vibration motor 125. The vibration motor 125 may be one or plural positioned within the remote controller 100. Therefore, the vibration motor 125 may vibrate the whole or the part of the remote controller 100.

According to an embodiment, the vibration motor 125 may output tactile feedback corresponding to receiving of the third control information according to the control of the controller 110. The vibration motor 125 may provide the various tactile feedbacks (e.g., intensity of the vibration corresponding to the various haptic patterns and vibration keep time) based on the third control information received by the controller 110.

The input/output interface 120 may transmit the electrical signal (e.g., analog signal or digital signal) corresponding to the received user input (e.g., touching, pressing, touch gestures, voice or motion) to the controller 110.

The communicator 130, under control of the controller 110, may transmit the control information (e.g., first, second or fourth control information) corresponding to the user input (e.g., touching, pressing, touch gestures, voice or motion) to the display apparatus 200. The communicator 130 may be wirelessly connected to the display apparatus 200. The communicator 130 may include at least one or both of the wireless local area network (LAN) 131 and the near field communicator 132.

The wireless LAN 131 may be wirelessly connected to access point (AP) under the control of the controller 110 at a place where AP is established. For example, the wireless LAN 131 may include a Wi-Fi module. The wireless LAN 131 may support the wireless LAN standard (IEEE8o2.11x) suggested by Institute of Electrical and Electronic Engineers (IEEE). Therefore, the wireless LAN 131 can utilize the Wi-Fi module to communicate with the AP through Wi-Fi protocol. Further, the near field communicator 132 may perform the near field communication between the remote controller 100 and an external device according to the control of the controller 110. The near field communication may include Bluetooth, Bluetooth low energy, infrared data association (IrDA), ultra wideband (UWB), or near field communication (NFC), for example.

The optical output interface 150 may output the optical signal (e.g., including the control information) corresponding to the user input (e.g., touching, pressing, touch gestures, voice or motion) to an optical receiver 250 of the display apparatus 200 according to the control of the controller 110. For the remote controller code format used in the remote controller 100, one of the manufacturer exclusive remote controller code format and the commercial remote controller code format may be used. The remote controller code format may include the leader code and the data word. The outputted optical signal may be modulated with the carrier wave and outputted. The control information may be stored in the storage 180 or generated by the controller 110. The optical output interface 150 may include Infrared-laser emitting diode (IR-LED) in order to generate the aforementioned optical signal.

The remote controller 100 may include at least one of the communicator 130 and the optical output interface 150 to transmit the control information to the display apparatus 200. For example, the remote controller 100 may include one or both of the communicator 130 and the optical output interface 150. The controller 110 may output the control information corresponding to the user input to the display apparatus 200 through the selected one of the communicator 130 and the optical output interface 150. Further, the controller 110 may transmit the control information corresponding to the user input to the display apparatus 200 with the priority through one of the communicator 130 and the optical output interface 150.

The storage 180 may store various data, programs or applications, which can be executed by the controller 110 to drive and control the remote controller 100. For example, the storage 180 may store the signal or the data inputted or outputted for driving the communicator 130, the optical output interface 150 and the power supply 190. The storage 180 may store the control information corresponding to the user input (e.g., touching, pressing, touch gestures, voice or motion) received according to the control of the controller 110.

The storage 180 may further store the remote controller information corresponding to the remote controller 100. The remote controller information may include the model name, the original device ID, the memory remained amount, whether the object data are stored or not, Bluetooth version or Bluetooth profile.

The storage 180 may further store the first control information transmitted to the display apparatus 200.

The storage 180 may store the second control information transmitted to the display apparatus 200. The second control information is corresponding to the movement of the remote controller 100.

The storage 180 may store the third control information transmitted from the display apparatus 200. Further, the storage 180 may store one or more haptic patterns corresponding to the received third control information. The horizontal axis (X axis) of the haptic pattern may indicate the vibration time of the vibration motor 125 that is shown by a basic unit of 50 ms, for example. Further, the vertical axis (Y axis) may indicate the vibration intensity of the vibration motor 125 that is shown by a basic unit of 500 mV, for example. The first haptic pattern may represent a vibration gradually increasing from o V to 800 mV, then gradually decreasing to 100 mV, and repeatedly increasing. Further, the increasing section and the decreasing section may be symmetrical to each other.

The second haptic pattern may be vibration gradually increasing from o V to 900 mV, then rapidly decreasing to 500 mV, gradually decreasing to 200 mV, and repeatedly increasing. Further, the third haptic pattern may be vibration gradually increasing from o V to 950 mV, then rapidly decreasing to 100 mV, and repeatedly increasing.

When there are a plurality of the haptic patterns, one pattern may be stored as a favorite haptic pattern among a plurality of the haptic patterns. When the favorite haptic pattern is established, the controller 110 may control the vibration motor 125 according to the favorite haptic pattern to provide the tactile feedback. In this embodiment, the haptic patterns may be added, modified or deleted correspondingly to the function or the constitution of the remote controller 100.

The storage 180 may store the fourth control information transmitted to the display apparatus 200. The fourth control information is corresponding to selection of one divided area among a plurality of the divided areas.

The power supply 190 may provide power to the units 120-180 of the remote controller 100 according to the control of the controller 110. The power supply 190 may provide power to the units 120-180 from one or more batteries positioned in the remote controller 100. The battery may be positioned inside the housing of the remote controller 100.

At least one unit illustrated in the remote controller 100 of FIGS. 1A, 1B and 2 may be added or deleted in the actual implementation of the remote controller 100. Furthermore, the positions of the units may be modified as well.

Referring to FIG. 2, the display apparatus 200 receiving the control information from the remote controller 100 may communicate with an external electronic apparatus in a wired or wireless manner by using the communicator 230 or the input/output interface 260. The external electronic apparatus may include the portable phone, the smart phone, the tablet PC, and a server.

The display apparatus 200 may include a display 270 and one or a combination of a tuner 220, the communicator 230, and the input/output interface 260. Further, the display apparatus 200 may be electrically connected to the external electronic apparatus including the tuner.

The display apparatus 200 may be implemented to be analog TV, digital TV, 3D-TV, smart TV, LED TV, OLED TV, plasma TV, monitor, curved TV having the fixed curvature of the screen, flexible TV having the fixed curvature of the screen, bended TV having the fixed curvature of the screen, and/or curvature modifiable TV in which the curvature of the current screen can be modified by the received user input. However, it may not be limited to the above.

The display apparatus 200 may include the controller 210, the tuner 220, the communicator 230, the microphone 240, the camera 245, the optical receiver 250, the input/output interface 260, the display 270, an audio output interface 275, the storage 280 and the power supply 290. The display apparatus 200 may further include the sensor detecting the internal state or the external state of the display apparatus 200 (e.g., illumination sensor and temperature sensor).

The controller 210 may include the processor 211, ROM 212 (or non-volatile memory) storing a control program for the controlling of the display apparatus 200, and RAM 213 (or volatile memory) storing signals or data inputted externally from the external electronic device or the remote controller 100 or used as storing area corresponding to the various operations performed in the display apparatus 200.

The controller 210 may control general operations of the display apparatus 200 and signal flows between the internal units 220-290 of the display apparatus 200, and process data. The controller 210 may control the power supply 290 to provide power to the internal units 220-280. Further, when a user input is performed or previously established and when the stored condition is met, the controller 210 may execute OS (Operation System) and various applications stored in the storage 280.

The processor 211 may include a graphic processing unit (GPU) for the graphic processing corresponding to the image or the video. The processor 211 may be implemented to be SoC (System On Chip) including a core and GPU. The processor 211 may include a single core, a dual core, a triple core, a quad core, or a larger number of the cores.

The processor 211 may include a plurality of processors, e.g., a main processor, a sub processor operating at a sleep mode, and a sensor processor controlling the sensor. Further, the processor 211, ROM 212 and RAM 213 may be connected to each other through the bus.

The controller 210 may control the communicator 230 to receive the control information from the remote controller 100. In addition, the controller may control the display 270 to display the pointer in response to the first control information, to move the displayed pointer in response to the received second control information, and to select one divided area among a plurality of the divided areas which virtually divide the display in response to the received third control information.

The controller 210 may transmit the third control information corresponding to the pointer's moving across the area dividing lines dividing a plurality of the divided areas to the remote controller 100 through the communicator 230.

The controller 210 may transmit the third control information to the remote controller 100 through the communicator 230 in response to a number of the pointer's moving across the area dividing lines.

The controller 210 may display the virtual key pad including a plurality of the divided areas and the area dividing lines on the display 270 in response to the third control information. The virtual key pad may overlap with a current image displayed on the display 270.

Each of the divided areas may represent different numbers. In addition, the controller 210 may control the display 270 to display a pop-up window showing a number that has been selected according to the selection of divided areas. Therefore, when a series of numbers are selected through selecting the divided areas for multiple times, a number having multiple digits may be displayed on the pop-up window. For example, the user may use the remote controller 100 to select a number 7, a number 2, and a number 6 in a series through selecting corresponding divided areas in a series. Then, the pop-up window may display a number "726", which has 3 digits according to the user's selections.

The controller 210 may change into the broadcast channel corresponding to the number displayed on the pop-up window.

The controller 210 may receive the third control information for a number of times corresponding to the digit number of the number displayed on the pop-up window.

The controller 210 may provide one feedback among the auditory feedback and the visual feedback correspondingly to the displaying of the broadcast channel.

When the display respectively outputs different channels through a plurality of the divided areas of the display 270, the controller 210 may display the pointer on one divided area among a plurality of the divided areas of the display in response to the received first control information, move the pointer in response to the received second control information, and select one divided area in response to the received third control information.

According to an embodiment, the controller 210 of the display apparatus 200, may include the processor 211, ROM 212 and RAM 213 of the display apparatus 200.

The constitution and the operation of the controller 110 may be variously implemented according to an embodiment.

Regarding the broadcast signal received by wire or wireless transmissions, the tuner 220 may tune and select only the channel frequency to be received by the display apparatus 200 among the various wave components through the amplification, the mixing and the resonance. The broadcast signal may include the video, the audio, and the additional data (e.g., Electronic Program Guide (EPG)).

The tuner 220 may receive the video, the audio and the data on the frequency bandwidth corresponding to a selected channel (e.g., cable broadcast # 24) in response to the user input (e.g., received control information from the remote controller, channel number inputting or channel up-down inputting).

The tuner 220 may receive the broadcast signal from various sources such as ground wave broadcast, cable broadcast, satellite broadcast, and internet broadcast. The tuner 220 may receive the broadcast signal from sources such as analog broadcast or digital broadcast. The tuner 220 may be implemented to be all-in-one with the display apparatus 200 or separate device including the tuner unit electrically connected to the display apparatus 200 (e.g., set-top box or tuner connected to the input/output interface 260).

The communicator 230 may connect the display apparatus 200 to the external electronic apparatus (e.g., server) according to the control of the controller 210. The controller 210 may download an application from the external electronic apparatus or browse a web through the communicator 230. Further, the communicator 230 may receive the control information from the remote controller 100 according to the control of the controller 210. The communicator 230 may include one or a combination of the wired Ethernet 231, the wireless LAN 232, and the near field communicator 233 according to the performance and the constitution of the display apparatus 200.

The microphone 240 may receive an uttered user voice. The microphone 240 may convert the received voice into the electrical signal and output the electrical signal to the controller 210. The user voice may include the voice corresponding to the menu of the display apparatus 200 or the function control, for example. The identifiable range of the microphone 240 may be suggested to be 4 m within a user position from the microphone 240, and may be set as a different value according to the user voice level and the surrounded environment (e.g., speaker sound or surrounded noises).

The microphone 240 may be embedded in the display apparatus 200 or be separated from the display apparatus 200. The separate microphone 240 may be electrically connected to the display apparatus 200 through the communicator 230 or the input/output interface 260.

The camera 245 may receive the video (e.g., consecutive frames) corresponding to the user motion including the gesture within the identifiable range of the camera. For example, the identifiable range of the camera 245 may be within 0.2 ∼ 5m from the camera 245 to a user. The user motion may include the user body part such as face, look, hand, fist, and finger or the motion of the user body part, for example.

The camera 245 may convert the received video into the electrical signal and output the electrical signal to the controller 210 according to the control of the controller 210. The controller 210 may display the menu on the display apparatus 200 by using the received motion recognition result or perform the control (e.g., channel change or volume adjustment) in response to the motion recognition result.

The camera 245 may be constituted with a lens and an image sensor. The camera 245 may support the optical zoom or the digital zoom by using a plurality of the lenses and image processing. The identifiable range of the camera 245 may be variously established according to the camera angle and the surrounded environment condition. When a plurality of the cameras 245 are provided, the three dimensional still image or the three dimensional motion may be received by using the first camera on the front of the display apparatus 200 and the neighbored second camera (e.g., the interval between the first camera and the second camera is greater than 2 cm and less than 8 cm).

The camera 245 may be separated from the display apparatus 200 or embeded in the display apparatus 200. The electronic apparatus including the separate camera may be electrically connected to the display apparatus 200 through the communicator 230 or the input/output interface 260.

The optical receiver 250 may receive the optical signal (including the control information) outputted from the remote controller 100 through an optical window. The optical receiver 250 may receive the optical signal corresponding to the user input (e.g., touching, pressing, touch gestures, voice or motion) from the remote controller 100. The control information may be extracted from the received optical signal. The extracted control information may be transmitted to the controller 210.

The input/output interface 260 may receive the content externally from the display apparatus 200 according to the control of the controller 210. The content may include the video, the image, the text or the web document, for example. Further, the content may include the video including ads, the image including ads, or the web document including ads. The input/output interface 260 may include one of HDMI inputting port 261 (High-Definition Multimedia Interface Port), a component inputting jack 262, PC inputting port 263 and USB inputting jack 264. The input/output interface 260 may include a combination of HDMI inputting port 261, the component inputting jack 262, PC inputting port 263, and USB inputting jack 264.

The display 270 may display the video included in the broadcast signal received through the tuner 220 according to the control of the controller 210. The display 270 may display the video inputted through the communicator 230 or the input/output interface 260. The display 270 may output the video stored in the storage 280 according to the control of the controller 210. Further, the display 270 may display a voice UI (User Interface, UI to be referred below, e.g., including a voice command guide) to perform the voice recognition task corresponding to the voice recognition or a motion UI (e.g., including a user motion guide for the motion recognition) to perform the motion recognition task corresponding to the motion recognition.

According to an embodiment, the screen of the display apparatus 200 may include the display 270 of the display apparatus 200.

The display 270 according to an embodiment may output the visual feedback of the broadcast channel corresponding to the number displayed on the pop-up window 330 according to the control of the controller 210 of the display apparatus 200.

The audio output interface 275 may output the audio included in the broadcast signal received through the tuner 220 according to the control of the controller 210. The audio output interface 275 may output the audio (e.g., voice or sound) inputted through the communicator 230 or the input/output interface 260. Further, the audio output interface 275 may output the audio stored in the storage 280 according to the control of the controller 210. The audio output interface 275 may include one of the speaker 276, a headphone outputting component 277 and S/PDIF outputting component 278. Further, the audio output interface 275 may include one or a combination of the speaker 276, the headphone outputting component 277 and S/PDIF outputting component 278.

The audio output interface 275 according to an embodiment may output the auditory feedback of the broadcast channel corresponding to the number displayed on the pop-up window 330 according to the control of the controller 210 of the display apparatus 200.

The storage 280 may store various data, programs and applications to drive and control the display apparatus 200 according to the control of the controller 210. The storage 280 may store the signals or data inputted/outputted correspondingly to operations of the tuner 220, the communicator 230, the microphone 240, the camera 245, the optical receiver 250, the input/output interface 260, the display 270, the audio output interface 275 and the power supply 290. The storage 280 may store the control program to control the display apparatus 200 and the controller 210, the applications initially provided by a manufacturer or downloaded externally, GUI (graphical user interface, GUI to be referred below) related with the applications, objects to provide GUI (e.g., images, texts, icons and buttons), user information, documents, database (DB), and relevant data.

According to an embodiment, the term "storage" may include the storage 280 of the display apparatus 200, ROM 212 and RAM 213 of the controller 210, and a memory card attached to the display apparatus 200 (e.g., micro SD card and USB memory, not illustrated). Further, the storage may include the non-volatile memory, the volatile memory, the hard disk drive (HDD) or the solid state drive (SDD).

In addition, the storage 280 may include broadcast reception module, channel control module, volume control module, communication control module, voice identification module, motion identification module, optical reception module, display control module, audio control module, external inputting control module, power control module, voice DB and motion DB. The aforementioned modules and DB of the storing unit may be implemented to be software format in order to perform the broadcast reception control function, the channel control function, the volume control function, the communication control function, the voice identify function, the motion identify function, the optical reception control function, the display control function, the audio control function, the external inputting control function, and the electrical power control function. The controller 210 may perform the functions of the display apparatus 200 by using the stored software in the storage 280.

The storage 280 may store the first control information received from the remote controller.

The storage 280 may store the second control information received from the remote controller.

The storage 280 may store the third control information transmitted to the remote controller 100. Further, the storage 280 may store the information regarding the pointer's moving across the area dividing lines.

The storage 280 may store the fourth control information received from the remote controller 100.

The storage 280 may store the number corresponding to one divided area among a plurality of the divided areas with the pointer.

The storage 280 may store the number displayed on the pop-up window 330 (e.g., one digit number, two digit number, three digit number, four digit number, five digit number, six or more digit number).

The storage 280 may store the virtual key pad 320 displayed on the whole screen of the display 270. The storage 280 may store a number of the divided areas, sizes of the divided areas (e.g., including the area size), and positions of the divided areas corresponding to the virtual key pad 320. Further, the storage 280 may store the numbers included in the divided areas (e.g., 1, 2, and others), sizes of the numbers, and positions of the numbers.

The storage 280 may store the video, the images or the texts corresponding to the visual feedback.

The storage 280 may store the sounds corresponding to the auditory feedback.

According to an embodiment, the term "storage" may be understood as a term including the storage 280, ROM 212 and RAM 213 of the controller 210, a storage (not illustrated) implemented to be SoC (not illustrated) and the memory card (e.g., micro SD card and USB card, not illustrated) attached to the electronic apparatus 200. Further, the storing unit may include the non-volatile memory, the volatile memory, HDD or SDD.

The power supply 290 may receive power from the external power sources and provide power to the internal units 220-280 of the display apparatus 200 according to the control of the controller 210. Or, the power supply 290 may receive power from one or two or more batteries positioned within the display apparatus 200 and provide power to the internal units 220-280 according to the control of the controller 210.

At least one unit illustrated in the display apparatus 200 of FIGS. 1A and 2 (e.g., 220-290) may be added or deleted in the actual implementation of the display apparatus 200. Further, positions of the units (e.g., 220-290) may be modified according to different design demands in the actual implementation of the display apparatus 200.

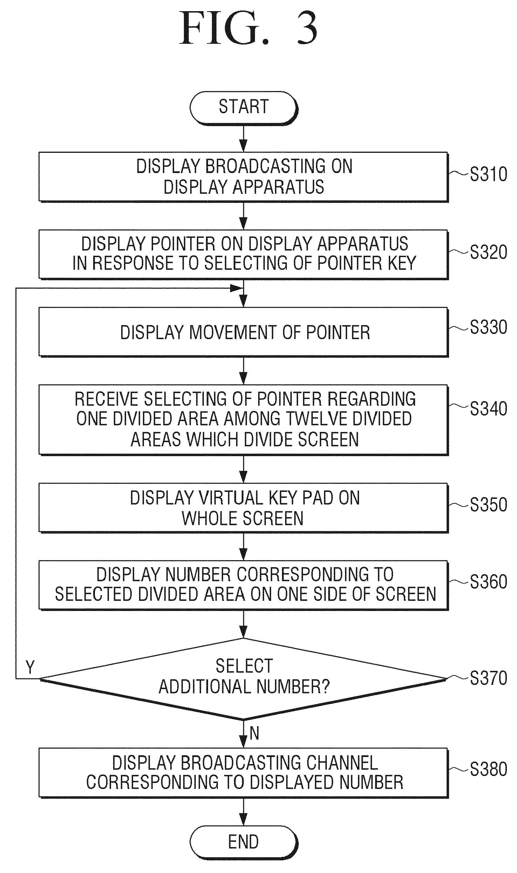

FIG. 3 is a flowchart explaining a method for controlling the screen of the remote controller according to an exemplary embodiment.

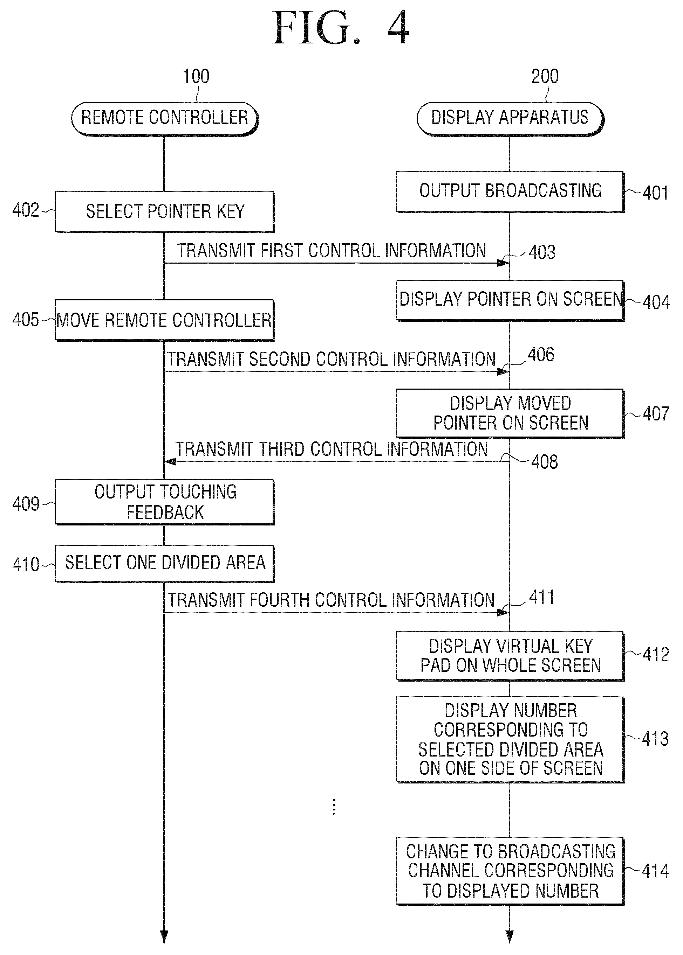

FIG. 4 is a sequence diagram illustrating the method for controlling the screen of the remote controller according to an exemplary embodiment.

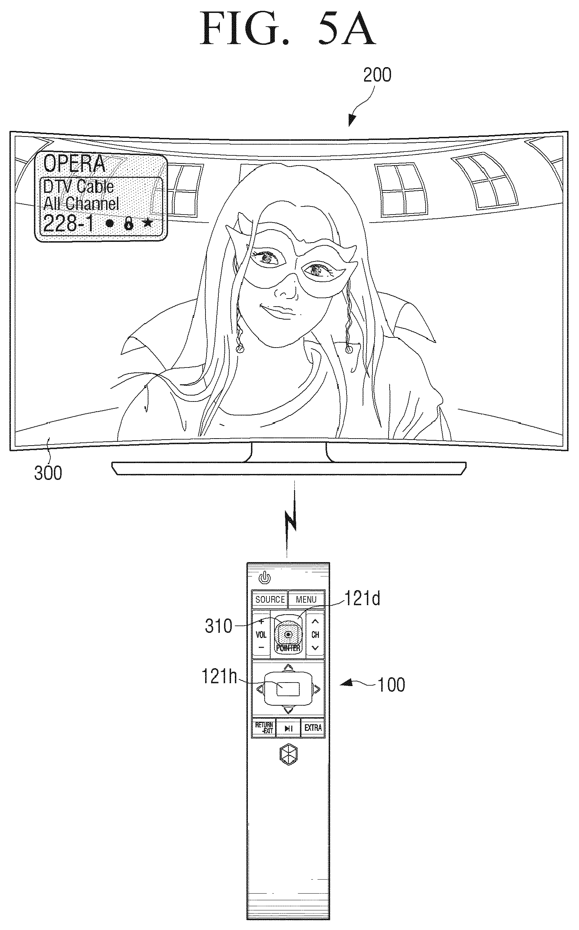

FIGS. 5A to 5G are diagrams illustrating examples regarding the method for controlling the screen of the remote controller according to an exemplary embodiment.

At S310 of FIG. 3, the broadcast may be displayed on the display apparatus.

Referring to FIGS. 4 and 5A, the display apparatus 200 may display the broadcast screen 300 (for example, a selected channel of a broadcast signal) according to the control of the controller 210 at S401.

The broadcast screen 300 may include the ground wave broadcast screen, the cable broadcast screen, the satellite broadcast screen, or the internet broadcast screen using the internet. The broadcast screen 300 may be selected by the user input inputted through one of the remote controller 100 and the panel key of the display apparatus 200. Further, the broadcast screen 300 may be selected by the user input inputted through the key of a broadcast receiving device or another remote controller controlling the broadcast receiving device.

According to an embodiment, the term "user" may indicate a person who controls the functions or the operations of the display apparatus 200 by using the remote controller 100, and may include a user, a manager or an install engineer.

At S320 of FIG. 3, the pointer may be displayed on the display apparatus 200 in response to the selection of the pointer key.

Referring to FIGS. 4 and 5A, a user may perform a first inputting 310 on the pointer key 121d of the remote controller 100 in order to change the broadcast channel of the display apparatus 200 at S402. Further, a user may perform the first inputting 310 on the touch pad 122 of the remote controller 100 to change the broadcast channel of the display apparatus 200.

The broadcast channel displayed on the display apparatus 200 may include one digit channel number, two digit channel number, three digit channel number and five digit channel number including symbol "-." For example, referring to FIG. 5A, the broadcast channel displayed on the display apparatus 200 may be five digit channel number, e.g., 228-1. Further, the one digit channel number may be 9, the two digit channel number may be 11, and the three digit channel number may be 605.

The first inputting 310 may include the selecting of the key (or button), pressing of the key (or button), touching of the key, and the touch gestures, which are performed by a user. Further, the first inputting 310 may include the user voice inputted through the microphone 123 and the user motion (or including the movement of the remote controller 100) detected by the sensor 124.

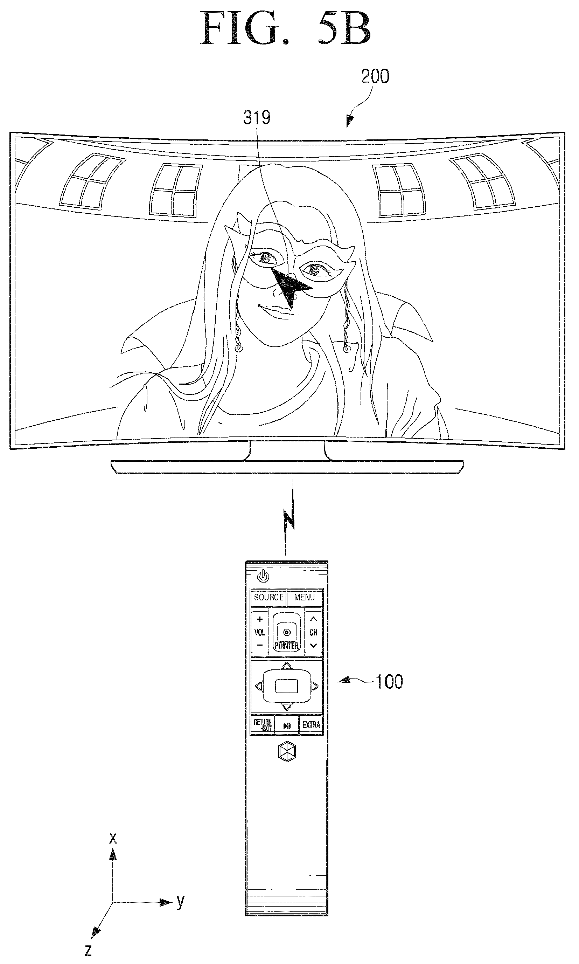

The controller 110 of the remote controller 100 may transmit the first control information corresponding to selecting of the pointer key 121d to the display apparatus 200 at S403. The controller 110 of the remote controller 100 may transmit the first control information corresponding to selecting of the pointer key 121d to the display apparatus 200 through one of the communicator 130 and the optical output interface 150. The first control information may be control information to display the pointer 319a of FIG. 5B on the screen of the display apparatus 200.

When the first control information is transmitted through the optical output interface 150, a user may keep the first inputting 310 on the pointer key 121d for an established time. For example, the established time may be 300 ms (modifiable through the establishment). The established time corresponding to the first control information may indicate the selecting of the pointer key 121d by a user for a longer time that is longer than the signal period from the first leader code of the remote controller code format to the consecutive second leader code (e.g., until the continuous code consecutive to the second leader code is outputted). The established time may be modified according to the model of the remote controller 100 or the manufacturer, which can be easily understood by a person skilled in the art.

When the first control information is transmitted through the near field communicator (e.g., Bluetooth 132), the controller 110 of the remote controller 100 may transmit the first control information in Bluetooth packet to the display apparatus 200. Bluetooth packet may include an access code (72 bit) to determine the effectiveness of the packet, a header (54 bit) and a payload (o ∼ 2,745 bit). The access code may be used to determine the effectiveness of the packet. The header may include MAC (media access control) address and a packet type. The payload may include the transmitted data, and may be modified in terms of the size according to the type of the packet. The transmitted first control information may be included in the payload of the packet.

When the remote controller 100 and the display apparatus 200 are initially connected to each other, the controller 110 of the remote controller 100 may search the display apparatus 200 by suing the near field communicator (e.g., Bluetooth 132). The controller 110 may request the inquiry and the connection page to the display apparatus 200.

The storage 180 may store the display apparatus connect information corresponding to the display apparatus 200 connected to the remote controller 100 according to the control of the controller 110. The stored display apparatus connect information may include a name of the display apparatus (SSID), MAC address, operation information (e.g., busy or standby) and context information.

The controller 110 of the remote controller 100 may transmit the first control information to the display apparatus 200 by using the stored display apparatus connect information.

Items included in the display apparatus connect information may be modified, added or deleted correspondingly to the functions (or performance and constitution) of the display apparatus, which can be easily understood by a person skilled in the art.

Referring to FIGS. 4 and 5B, the pointer may be displayed on the screen of the display apparatus 200 at S404.

The communicator 230 of the display apparatus 200 may receive the first control information from the remote controller 100 according to the control of the controller 210. The display apparatus 200 may receive the first control information outputted from the remote controller 100 through the communicator 230 or the optical receiver 250. The received first control information may be stored in the storage 280 according to the control of the controller 210.

The controller 210 of the display apparatus 200 may control the screen of the display 270 to display the pointer 319 in response to the received first control information. The controller 210 may control the screen of the display 270 to display the pointer 319 on an established position of the screen. For example, the established position may be a center area of the screen of the display apparatus 200, one divided area among the two-divided screen areas, one divided area among the four-divided screen areas, or the final pointer position previous to the input of the first inputting 310. The storage 280 may store the final pointer position according to the control of the controller 210.

In this way, if the controller 210 determines that the pointer 319 should be displayed on the final pointer position, the controller 210 may control the screen to display the pointer 319 on the final pointer position of the screen of the display apparatus 200 according to the final pointer position stored in the storage 280.

The size of the pointer 319a may be modified according to the display apparatus information of the display apparatus 200. For example, the size of the pointer 319a may be modified according to the screen size of the display apparatus 200 or the screen resolution of the display apparatus 200. Further, the size of the pointer 319a may be modified correspondingly to the size of the divided screen area of the display apparatus 200 or the resolution of the divided screen area of the display apparatus 200.

At S330 of FIG. 3, the moving of the pointer may be displayed.

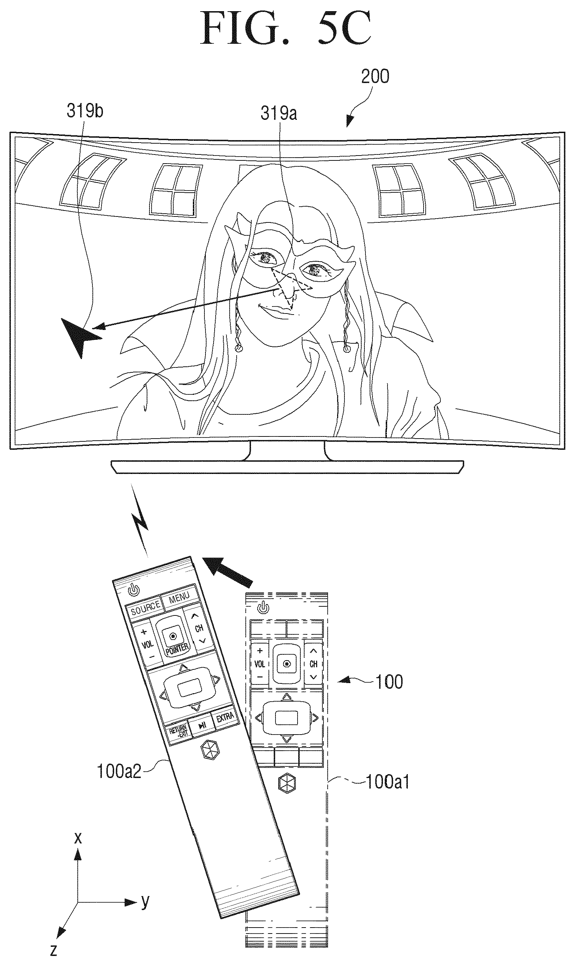

Referring to FIGS. 4 and 5C, a user may move the remote controller 100 to change the broadcast channel of the display apparatus 200 at S405. A user may move the remote controller 100 toward the two axes or the three axes. For example, a user may move the remote controller 100 toward X axis (e.g., horizontal direction), Y axis (e.g., vertical direction) or Z axis (e.g., rotating direction), for example, from 100a1 to 100a2. The remote controller 100 may be moved by a user toward the three axes (e.g., X, Y, and Z axes) countered to the display apparatus 200. The remote controller 100 may be moved by a user toward the left upper side.

The movement of the remote controller 100 may be detected by the sensor 124 periodically (e.g., time interval can be set as any value as long as the sensor can detect the movement of the remote controller 100). The sensor 124 may output the analog signal in response to the movement of the remote controller 100 to the controller 110. Or, the analog signal outputted from the sensor 124 may be converted into the digital signal by a converter and then outputted to the controller 110.

The storage 180 may store the analog signal or the converted digital signal according to the control of the controller 110. In the following disclosure, the analog signal or the digital signal are named as move information. The stored move information may include move information identifier (ID) for the record management, the detected acceleration values (e.g., two axes or three axes) of the remote controller 100, the detected move time of the remote controller 100 or the move distance of the remote controller 100.

The move information may be periodically stored from the first position 100a1 of the remote controller 100 to the second position 100a2. The move information may contain multiple entries stored periodically according to the detection resolution of the sensor 124.

The controller 110 may generate the second control information by using the stored move information. The controller 110 may generate the second control information by using the periodically stored move information. The second control information may be generated periodically when the remote controller moved from the first position 100a1 to the second position 100a2. The second control information may be control information that can correspondinly move the pointer 319a toward 319b on the screen of the display apparatus 200.

The second control information may include the two dimensional or the three dimensional control information. The two dimensional second control information may be control information generated by excluding one axis from the movement of the remote controller 100. The three dimensional second control information may be control information generated in response to the complete 3-axis movement of the remote controller 100. The controller 110 may transmit one of the two dimensional and the three dimensional control information as the second control information to the display apparatus 200.

The controller 110 may transmit the second control information to the display apparatus 200 at S406. The controller 110 may transmit the second control information periodically to the display apparatus 200. Further, the controller 110 may transmit the second control information periodically generated when the remote controller 100 moves from the first position 100a1 to the second position 100a2 to the display apparatus 200.

The mechanism of transmitting the second control information of the remote controller 100 is substantially similar to the mechanism of transmitting the first control information of the remote controller 100, and thus further illustration is omitted here for simplicity.

Referring to FIGS. 4 and 5C, the pointer may be displayed on the screen of the display apparatus 200 at S407.

The communicator 230 of the display apparatus 200 may receive the second control information from the remote controller 100 according to the control of the controller 210. The display apparatus 200 may receive the second control information outputted from the remote controller 100 through the communicator 230 or the optical receiver 250. The received second control information may be stored in the storage 280 according to the control of the controller 210.

The controller 210 may move the pointer 319 on the screen of the display apparatus 200 (e.g., from the first position 319a to the second position 319b) by using the received second control information.

When the received second control information is two dimensional control information, the controller 210 may move the pointer 319 two dimensionally on the screen of the display apparatus 200 by using the received second control information. When the received second control information is three dimensional second control information, the controller 210 may move the pointer 319 two dimensionally on the screen of the display apparatus 200 by analyzing the received second control information (e.g., excluding one axis from the three axes). Or, when the received second control information is three dimensional control information and when the three dimensional display is performed on the screen of the display apparatus 200, the controller 210 may move the pointer 319 three dimensionally on the three dimensional screen of the display apparatus by analyzing the received second control information.

The controller 210 may move the pointer 319 from the first position 319a, at the center of the screen of the display apparatus 200, to the second position 319b in response to the received second control information. The controller 210 may modify the moving speed of the pointer 319 in response to the received second control information. For example, when the remote controller 100 is quickly moved by a user, the controller 210 may quickly move the pointer 319 in response to the received second control information. Further, when the remote controller 100 is slowly moved by a user, the controller 210 may slowly move the pointer 319 in response to the received second control information.

Referring to FIGS. 4 and 5D, the controller 210 of the display apparatus 200 may transmit the third control information to the remote controller 100 at S408.

While moving the pointer 319 from on the first position 319a to the second position 319b, the pointer 319 may move across the area dividing line 321 of the virtual key pad 320. The virtual key pad 320 may not be displayed at S330 of FIG. 3. The pointer 319 may be first displayed on the screen of the display apparatus 200, and then the virtual key pad 320 may be displayed.

When the pointer 319 is not displayed on the screen of the display apparatus 200, the controller 210 may not control the screen to display the virtual key pad 320. Further, when the pointer 319 is first displayed on the broadcast screen of the display apparatus 200, the controller 210 may control the screen to display the virtual key pad 320. When the pointer 319 is not first displayed on the broadcast screen of the display apparatus 200, the controller 210 may not control the screen to display the virtual key pad 320. When the virtual key pad 320 is not displayed, the controller 210 may not control the screen to display the area dividing line 321 of the virtual key pad 320.

The virtual key pad 320 is transparent and thus may be overlapped with the broadcast screen displayed on the display apparatus 200. The transparency may be established to be 1 to 99 %, for example, by a manufacturer or a user.

The virtual key pad 320 may divide the whole screen of the display apparatus 200 into twelve divided areas 322a -322l with the area dividing lines 321. The twelve divided areas 322a- 322l may respectively include numbers (e.g., 1, 2,3, ... , o) or texts (e.g., one, two, three, ... , zero). Further, the left area 322j or the right area 322l of the divided area 322k may include symbols (or images).

When the pointer 319 is moved from the first position 319a to the second position 319b in response to the second control information, the controller 210 may not display the virtual key pad 320 on the screen of the display apparatus 200. When the pointer 319 is moved from the first position 319a to the second position 319b in response to the second control information, the controller 210 may not display the area dividing lines 321 of the virtual key pad 320 on the screen of the display apparatus 200. When the pointer 319 approaches at the second position 319b in response to the second control information, the controller 210 may not control the screen to display the virtual key pad 320 on the screen of the display apparatus 200.

The controller 210 may detect that the pointer 319 moves across the area dividing lines 321 in response to the second control information. Further, the controller 210 may detect that the pointer 319 moves across the area dividing lines 321 for multiple times.

When the pointer's 319 moving across the area dividing lines 321 is detected, the storage 280 may store the information regarding the pointer's moving across the area dividing lines according to the control of the controller 210. When a plurality of the pointer's moving across the area dividing lines 321 are detected, the storage 280 may respectively store the information regarding a plurality of the pointer's moving across the area dividing lines according to the control of the controller 210. Further, when a plurality of the pointer's moving across the area dividing lines 321 are detected, the storage 280 may store the information regarding the pointer's moving across the area dividing lines. The stored information may store the identifier (ID) for the record management, the identifier (ID) for the area dividing line where the pointer passing is detected, the area dividing line position, and a number of times of the pointer's passing across the area dividing lines.

The controller 210 may generate the third control information by using the stored information regarding the pointer's moving across the area dividing lines. The controller 210 may transmit the third control information to the remote controller 100 by using the communicator 230. The controller 210 may repeatedly transmit the third control information to the remote controller 100 by using the communicator 230 (e.g., 10 times per 5 ms interval, the interval can be modifiable through the establishment). The third control information may be control information to provide tactile feedback by the remote controller 100.

The third control information may include whether a vibration component 165 of the remote controller 100 is activated/deactivated, the vibration intensity of the vibration component 165 or the total vibration time of the vibration component 165. The third control information may be transmitted to the remote controller 100 by 5 ms interval; however, this is merely one of embodiments. The transmitting the third control information may be modifiable according to the frequency of the haptic pattern. The transmitting frequency and the transmitting period of the third control information may be modifiable. The transmission of the third control information may be periodically performed until the time point when the movement of the pointer 319 completes (e.g., approaching at the second position 319b).

Referring to FIGS. 4 and 5D, the controller 110 of the remote controller 100 may provide tactile feedback at S409.

The communicator 130 of the remote controller 100 may receive the third control information from the display apparatus 200 according to the control of the controller 110. The remote controller 100 may receive the third control information transmitted from the display apparatus 200 through the communicator 130. The received third control information may be stored in the storage 180 according to the control of the controller 110 of the remote controller 100.

The controller 110 may provide tactile feedback 125a for a preset time period by using the received third control information. The preset time period may be 500 ms (e.g., modifiable through the establishment). The controller 110 may provide tactile feedback 125a (e.g., vibration intensity or total vibration time) by activating the vibration motor 125 with the stored haptic patterns in the storage 180. When there is favorite haptic pattern in the storage 180, the controller 110 may provide the favorite haptic pattern as tactile feedback 125a with the priority through the vibration motor 125.

The controller 110 may provide the auditory feedback through the speaker as well as tactile feedback 125a through the vibration motor 125.

At S340 of FIG. 3, the selecting of the pointer regarding one area among the twelve areas may be received.

Referring to FIGS. 4 and 5D, when the pointer 319 approaches at the second position 319b (e.g., positioned on the seventh divided area 322g of the screen of the display apparatus 200), a user may perform a second inputting 311 on the enter key 121h of the remote controller 100 in order to change the broadcast channel of the display apparatus 200 at S410. A user may perform the second inputting 311 on the enter key 121h of the remote controller 100 in order to select a first number corresponding to the broadcast channel of the display apparatus 200.

The second inputting 311 may include the key (or button) selecting of a user, the key (or button) pressing of a user, the key touching of a user, and the touch gestures of a user, which are substantially similar to the first inputting 310. Further, the second inputting 310 may include the user voice inputted through the microphone 123 and the user motion detected by the sensor 124 (or including the movement of the remote controller 100).

Referring to FIG. 4, the controller 110 of the remote controller 100 may transmit the fourth control information corresponding to selecting of the enter key 121h to the display apparatus 200 at S411.

The controller 110 of the remote controller 100 may transmit the fourth control information corresponding to selecting of the enter key 121h to the display apparatus 200 through one of the communicator 130 and the optical output interface 150. The fourth control information may be control information to display the virtual key pad 320 on the screen of the display apparatus 200. Further, the fourth control information may be control information corresponding to selecting of one area among the twelve divided areas on the screen of the display apparatus 200. The fourth control information may be control information corresponding to the operation regarding a plurality of the items (e.g., selecting one divided screen area and displaying the virtual key pad) to control the display apparatus 200.

The transmission mechanism of transmitting the fourth control information to the display apparatus 200 is substantially similar to that of transmitting the first control information to the display apparatus 200 and thus further illustration is omitted here for simplicity.

The controller 110 of the remote controller 100 may transmit the fourth control information to the display apparatus 200 through one of the communicator 130 and the optical output interface 150 in response to the additional selecting of the pointer key 121d as well as selecting of the enter key 121h.

At S350 of FIG. 3, the virtual key pad may be displayed on the whole screen of the display apparatus.

Referring to FIGS. 4 and 5D, the communicator 230 of the display apparatus 200 may receive the fourth control information from the remote controller 100 according to the control of the controller 210. The display apparatus 200 may receive the fourth control information outputted from the remote controller 100 through one of the communicator 230 and the optical receiver 250. The received fourth control information may be stored in the storage 280 according to the control of the controller 210 of the display apparatus 200.

The controller 210 of the display apparatus 200 may control the screen to display the virtual key pad 320 by using the fourth control information at S412.

The controller 210 may control the screen to display the virtual key pad 320 in response to the fourth control information. The second position 319b of the pointer 319 may be positioned on the seventh divided area 322g of the virtual key pad 320 displayed correspondingly to the fourth control information.

The controller 210 may control the screen to display the selection of the seventh divided area 322g by using the received fourth control information. In response to the selection of the seventh divided area 322g, the controller 210 of the display apparatus 200 may display the seventh divided area 322g to be distinguished from the other divided areas 322a-322l. For example, the distinguishing of the seventh divided area 322g may be accomplished by flickering, color changing of the seventh divided area 322g for a preset time period(e.g., 100 ms, modifiable), or color changing of the number displayed on the seventh divided area 322g.

The controller 210 may control the screen to display the seventh divided area 322g to be distinguished and may not display the virtual key pad 320. Or, the controller 210 may control the screen to display the seventh divided area 322g to be distinguished and may display the virtual key pad 320 for a preset time period (e.g., 500 ms, modifiable).

At S360 of FIG. 3, the number corresponding to the selected one divided area may be displayed on a corner of the screen.

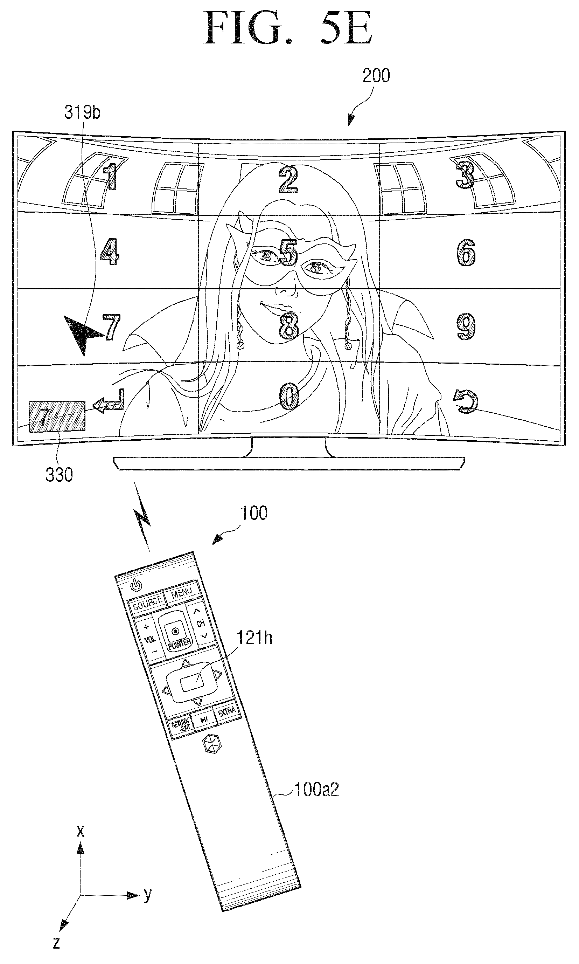

Referring to FIGS. 4 and 5E, the number corresponding to the selected one divided area may be displayed on a corner of the screen of the display apparatus 200 at S413.

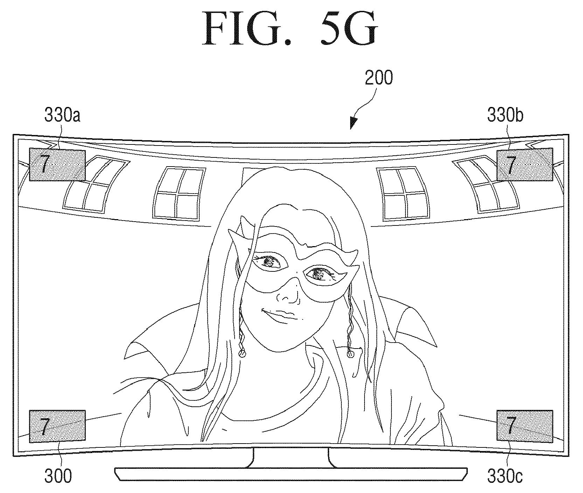

The controller 210 of the display apparatus 200 may display the number (e.g., 7) corresponding to the selected seventh divided area 322g on a corner of the screen of the display apparatus 200. The number corresponding to the seventh divided area 322g may be displayed on the pop-up window 330 on a corner of the four corners of the screen of the display apparatus 200. Referring to FIG. 5G, the pop-up window 330 may be displayed on the four corners of the display apparatus 200. Further, the pop-up window 330 may be positioned on any area of the screen of the display apparatus 200 as well as one corner (e.g., 330-330c) of the screen of the display apparatus 200.

Because the pop-up window 330 is transparent, the pop-up window 330 may be overlapped with the broadcast image displayed on the display apparatus 200. The transparency may be established to be 1 to 99 %, for example, by a manufacturer or a user. Further, the virtual key pad 320 and the pop-up window 330 may be overlapped with the broadcast image of the display apparatus 200 together. The transparency of the virtual key pad 320 and the transparency of the pop-up window 330 may be identical or different.

The pop-up window 330 may have the size that can display the longest broadcast channel digit number (e.g., five digit channel number). Further, the pop-up window 330 may have the uniform size regardless of the broadcast channel digit number. For example, the pop-up window displaying the one digit channel number may have the same size as the pop-up window displaying the five digit channel number.

The size of the pop-up window 330 may increase correspondingly to the selecting of the one divided area with the remote controller 100. For example, the pop-up window displaying the one digit channel number may have a smaller size than the pop-up window displaying the three digit channel number.

The position of the pop-up window 330 may be modified by the selection or the establishment of the remote controller 100 (e.g., with the key of the remote controller 100).

After the current broadcast channel (e.g., 228-1) of the display apparatus 200 is changed to another broadcast channel number, the controller 210 may not display the pop-up window 330.

At S370 of FIG. 3, whether to select an additional number on the virtual key pad may be determined.

The controller 210 of the display apparatus 200 may determine whether an additional number is selected on the virtual key pad 330. Whether to select an additional number with the pointer 319 may be determined by considering whether to receive the additional second control information corresponding to the movement of the pointer 319 from the remote controller 100 within a preset standby time (e.g., 3 sec, modifiable). Further, whether to select an additional number on the virtual key pad 330 may be determined by considering whether to receive the ninth control information corresponding to selecting of the key (e.g., 121j of FIG. 1B) to delete the number displayed on the pop-up window 330 from the remote controller 330 within a preset standby time (e.g., 3 sec, modifiable).

When the additional second control information is not received within the preset standby time or when the ninth control information is not received, the controller 210 of the display apparatus 200 may determine that an additional number is not selected on the virtual key pad 330.

When the preset standby time passes over, the controller 210 of the display apparatus 200 may determine that an additional number is not selected on the virtual key pad 320.

Further, the controller 210 of the display apparatus 200 may determine whether the broadcast channel corresponding to the number displayed on the pop-up window 330 is obtained or not. For example, the broadcast channel corresponding to the number displayed on the pop-up window 330 may be 1. The controller 210 of the display apparatus 200 may compare the broadcast channel corresponding to the number displayed on the pop-up window 330 (e.g., 1) with the broadcast channel list stored in the storage 280. When there is no broadcast channel corresponding to the number displayed on the pop-up window 330 from the broadcast channel list, the controller 210 of the display apparatus 200 may standby the receiving of the additional second control information from the remote controller 100.

When there is no broadcast channel corresponding to the number displayed on the pop-up window 330 from the broadcast channel list, the controller 210 of the display apparatus 200 may request for transmitting of the additional second control information to the remote controller 100. The request for transmitting of the additional second control information may be embodied as a sound through the speaker of the remote controller 100 or a tactile feedback.

At S370 of FIG. 3, when the control information corresponding to selecting of the additional number is received from the remote controller 100, S320 and S330 of FIG. 3 may be performed.

At S370 of FIG. 3, when the controller 210 of the display apparatus 200 determines that an additional number is not selected on the virtual key pad 320, S380 of FIG. 3 may be performed.

At S380 of FIG. 3, the broadcast channel corresponding to the number displayed on the pop-up window may be displayed.

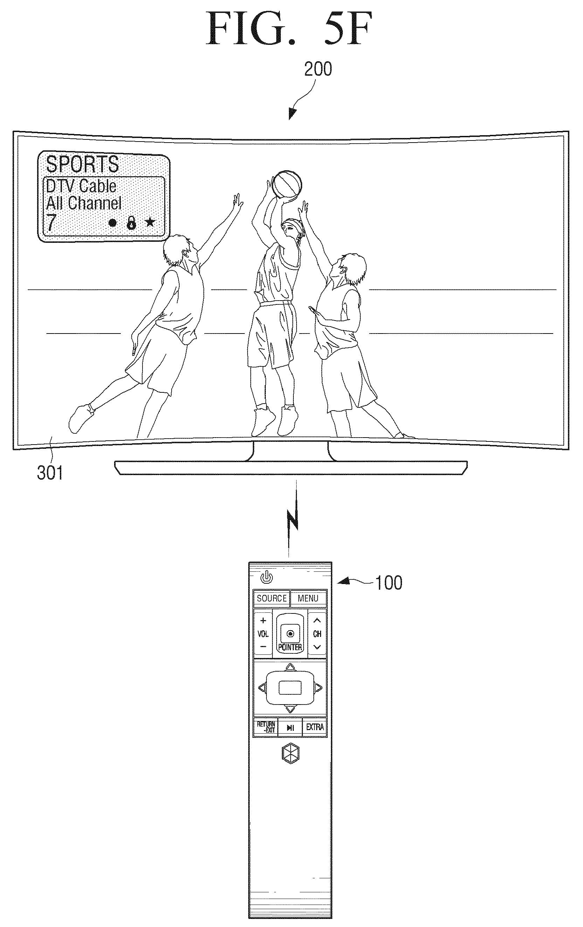

Referring to FIGS. 4 and 5F, the channel may be changed to the broadcast channel corresponding to the number displayed on the pop-up window 330 at S414. The controller 210 of the display apparatus 200 may change the broadcast channel (e.g., 228-1) into the broadcast channel corresponding to the number displayed on the pop-up window 330 (e.g., 7). The displayed broadcast channel (e.g., 7) may be a sports channel (e.g., basketball game 301).

The controller 210 of the display apparatus 200 may provide at least of the auditory feedback (e.g., through the speaker 276) and the visual feedback (e.g., through the display 270) in response to the changing into the broadcast channel (e.g., 7).

At S380 of FIG. 3, when the broadcast channel corresponding to the number displayed on the pop-up window 330 is displayed on the screen of the display apparatus 200, the method for controlling the screen of the remote controller may complete.

At S370 of FIG. 3 again, when the control information corresponding to selecting of the additional number is received from the remote controller 100, S320 and S330 of FIG. 3 may be performed.

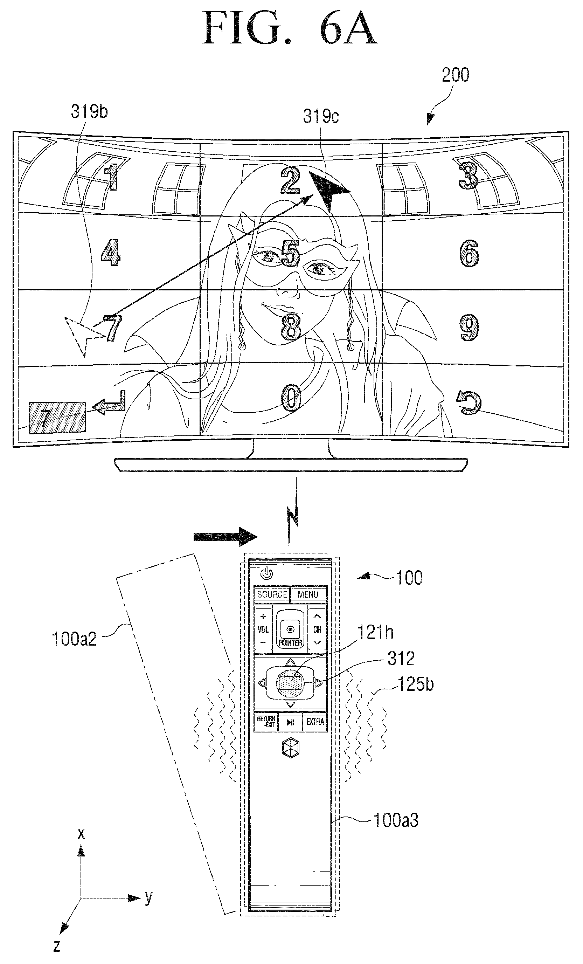

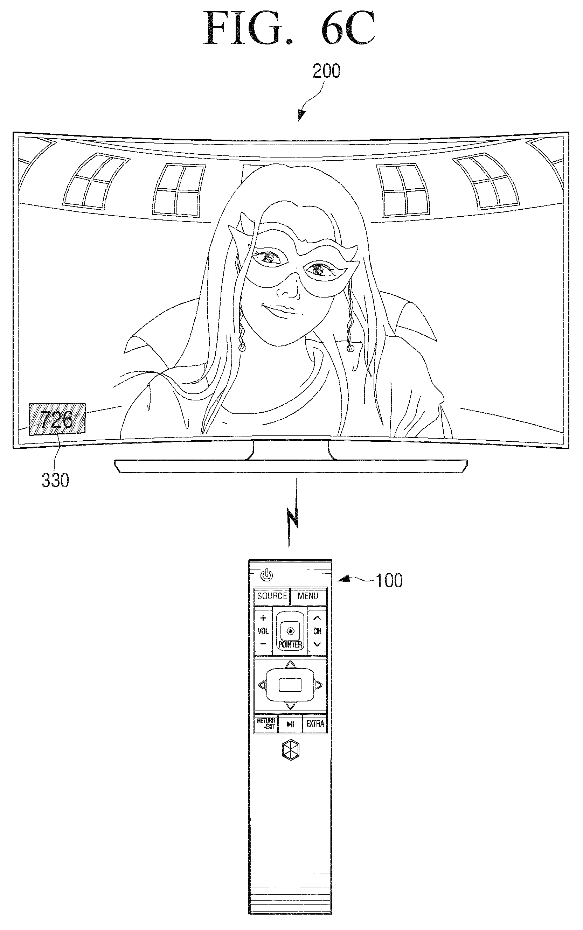

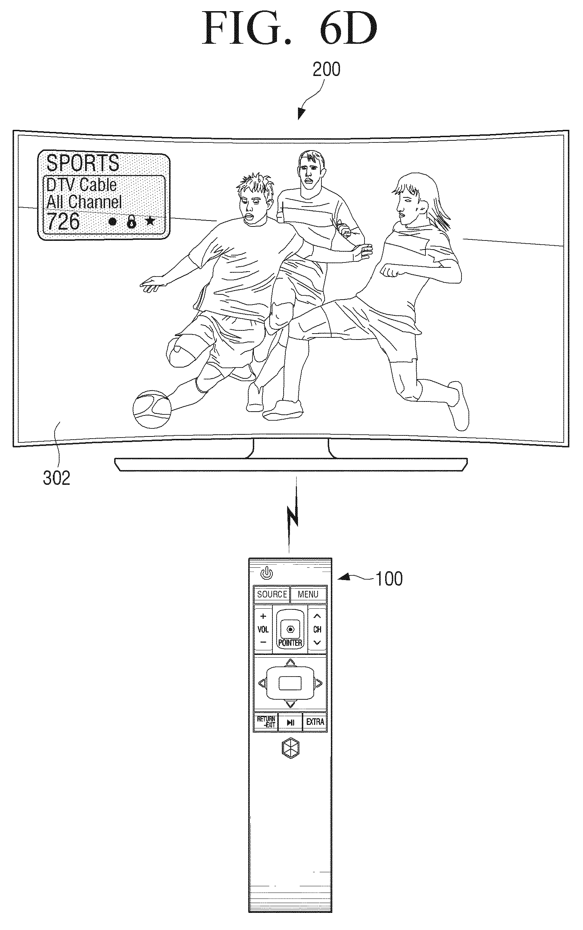

FIGS. 6A to 6D are diagrams illustrating examples regarding the method for controlling the screen of the remote controller according to an exemplary embodiment.

Referring to FIG. 6A, when the remote controller 100 moves from the second position 100a2 to a third position 100a3, the controller 110 of the remote controller 100 may transmit the additional second control information corresponding to the movement of the remote controller 100 to the display apparatus 200.

The movement of the remote controller 100 from the second position 100a2 to the third position 100a3 is substantially similar to the movement of the remote controller 100 from the first position 100a1 to the second position 100a2 (e.g., the moving positions are the only difference), and thus further illustration is omitted here..

The transmission of the additional second control information from the remote controller 100 to the display apparatus 200 is substantially similar to the transmission of the second control information from the remote controller 100 to the display apparatus 200 (e.g., the moving positions are the only difference), and thus further illustration is omitted here..

When the remote controller 100 moves across the area dividing line 321 of the virtual key pad 320, the controller 210 of the display apparatus 200 may transmit the additional third control information corresponding to moving across the area dividing line 321 of the remote controller 100 to the remote controller 100. Further, when the remote controller 100 moves across the area dividing line 321 of the virtual key pad 320 for plural times, the controller 210 of the display apparatus 200 may transmit the additional third control information corresponding to moving across the area dividing line 321 of the remote controller 100 to the remote controller 100.

The transmitting of the additional third control information from the display apparatus 200 to the remote controller 100 is substantially similar to the transmitting of the third control information from the display apparatus 200 to the remote controller 100 and thus further illustration is omitted here.

The controller 110 of the remote controller 100 may provide tactile feedback 125b in response to the received third control information. The providing of tactile feedback 125b in the remote controller 100 is substantially similar to the providing of tactile feedback 125a in the remote controller 100 and thus further illustration is omitted here..

A user may perform the third inputting 312 on the enter key 121h of the remote controller 100 in order to select the second number corresponding to the broadcast channel of the display apparatus 200. The remote controller 100 may transmit the additional fourth control information corresponding to the third inputting 312 to the display apparatus 200. The transmitting of the additional fourth control information from the remote controller 100 to the display apparatus 200 (e.g., transmitting the additional fourth control information for plural times) is substantially similar to the transmitting of the fourth control information from the remote controller 100 to the display apparatus 200 and thus further illustration is omitted here.

The display apparatus 200 may display the virtual key pad 320 in response to the receiving of the additional fourth control information (e.g., receiving the fourth control information for plural times). The displaying of the virtual key pad 320 corresponding to the additional fourth control information is substantially similar to the displaying of the virtual key pad 320 corresponding to the fourth control information and thus further illustration is omitted here.

The display apparatus 200 may add the number (e.g., 2) corresponding to the selected divided area 322b on the pop-up window 330 in response to the receiving of the additional fourth control information.

Whether to select an additional number on the virtual key pad 320 may be determined within a preset standby time. The determining whether to select an additional number on the display apparatus displaying the two-digit channel number is substantially similar to the determining whether to select an additional number on the display apparatus displaying the one digit channel number and thus further illustration is omitted here.

When an additional number is not selected on the virtual key pad 320, the display apparatus 200 may change the broadcast channel (e.g., 228-1) displayed on the display apparatus 200 into the broadcast channel (e.g., 72) corresponding to the number displayed on the pop-up window 330. The displayed broadcast channel (e.g., 72) may be a movie channel.

When the broadcast channel corresponding to the two-digit number (e.g., 72) displayed on the pop-up window 330 is displayed on the screen of the display apparatus 200, the method for controlling the screen of the remote controller may complete.

At S370 of FIG. 3, when the control information corresponding to selecting of the additional number is received from the remote controller 100, S320 and S330 of FIG. 3 may be performed.

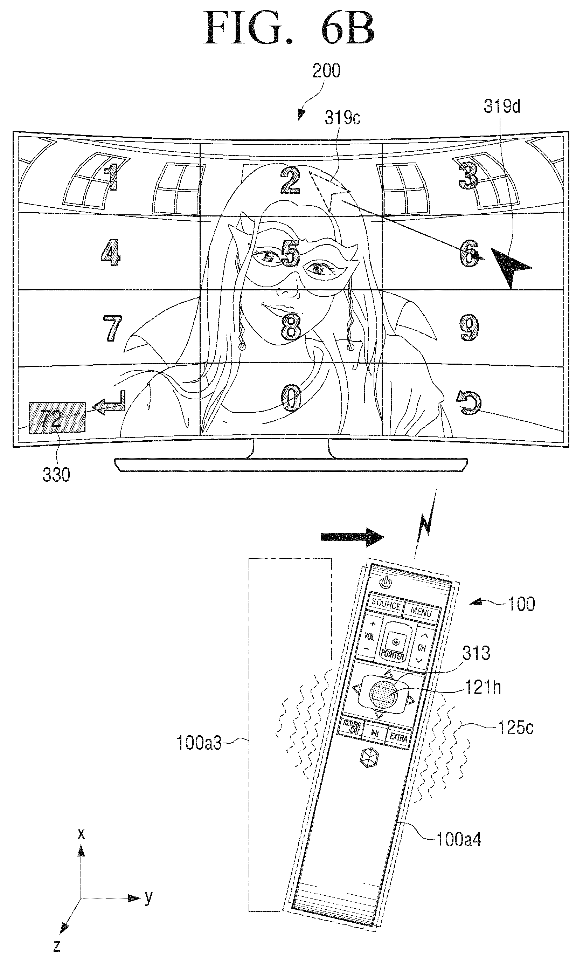

Referring to FIG. 6B, when the remote controller 100 moves from the third position 100a3 to a fourth position 100a4, the controller 110 of the remote controller 100 may transmit the additional second control information corresponding to the movement of the remote controller 100 to the display apparatus 200.

The movement of the remote controller 100 from the third position 100a3 to the fourth position 100a4 is substantially similar to the movement of the remote controller 100 from the first position 100a1 to the second position 100a2 and thus further illustration is omitted here.

The transmitting the second-three control information from the remote controller 100 to the display apparatus 200 is substantially similar to the transmitting of the second control information from the remote controller 100 to the display apparatus 200 and thus further illustration is omitted here.

When the remote controller 100 moves across the area dividing line 321 of the virtual key pad 320, the controller 210 of the display apparatus 200 may transmit the additional third control information corresponding to moving across the area dividing line 321 of the remote controller 100 to the remote controller 100. Further, when the remote controller 100 moves across the area dividing line 321 for plural times, the controller 210 of the display apparatus 200 may transmit the additional third control information corresponding to moving across the area dividing line 321 of the remote controller 100 to the remote controller 100.

The transmitting of the additional third control information from the display apparatus 200 to the remote controller 100 is substantially similar to the transmitting of the third control information from the display apparatus 200 to the remote controller 100 and thus further illustration is omitted here.

The controller 110 of the remote controller 100 may provide tactile feedback 125b in response to the received additional third control information. The controller 110 of the remote controller 100 may provide the additional tactile feedback 125b in response to the received additional third control information (e.g., moving across the area dividing line 321 for plural times). The providing of tactile feedback 125b in the remote controller 100 is substantially similar to the providing of tactile feedback 125a in the remote controller 100 and thus further illustration is omitted here.

A user may perform the fourth inputting 313 on the enter key 121h of the remote controller 100 in order to select the third number corresponding to the broadcast channel of the display apparatus 200. The remote controller 100 may transmit the additional fourth control information corresponding to the fourth inputting 313 to the display apparatus 200 (e.g., transmitting the additional fourth control information for plural times). The transmitting of the additional fourth control information from the remote controller 100 to the display apparatus 200 is substantially similar to the transmitting of the fourth control information from the remote controller 100 to the display apparatus 200 and thus further illustration is omitted here.

The display apparatus 200 may display the virtual keypad 320 in response to the receiving of the additional fourth control information (e.g., receiving the fourth control information for plural times). The displaying of the virtual key pad 320 corresponding to the additional fourth control information is substantially similar to the displaying of the virtual key pad 320 corresponding to the fourth control information and thus further illustration is omitted here.

The display apparatus 200 may add the number (e.g., 6) corresponding to the selected divided area 322f on the pop-up window 330 in response to the receiving of the additional fourth control information. The pop-up window 330 may display the three digit channel number (e.g., 726).

Whether to select an additional number on the virtual key pad 320 may be determined within a preset standby time. The determining whether to select an additional number in the display apparatus displaying the three digit number is substantially similar to the determining whether to select an additional number in the display apparatus displaying the one digit channel number and thus further illustration is omitted here.

When an additional number is not selected on the virtual key pad 320, the display apparatus 200 may change the broadcast channel (e.g., 228-1) displayed on the display apparatus 200 into the broadcast channel (e.g., 726) corresponding to the number displayed on the pop-up window 330. The displayed broadcast channel (e.g., 726) may be screen at a sports channel (e.g., football game 302).

When the broadcast channel (e.g., 726) corresponding to the three digit number on the pop-up window 330 is displayed on the screen of the display apparatus 200, the method for controlling the screen of the remote controller may complete.

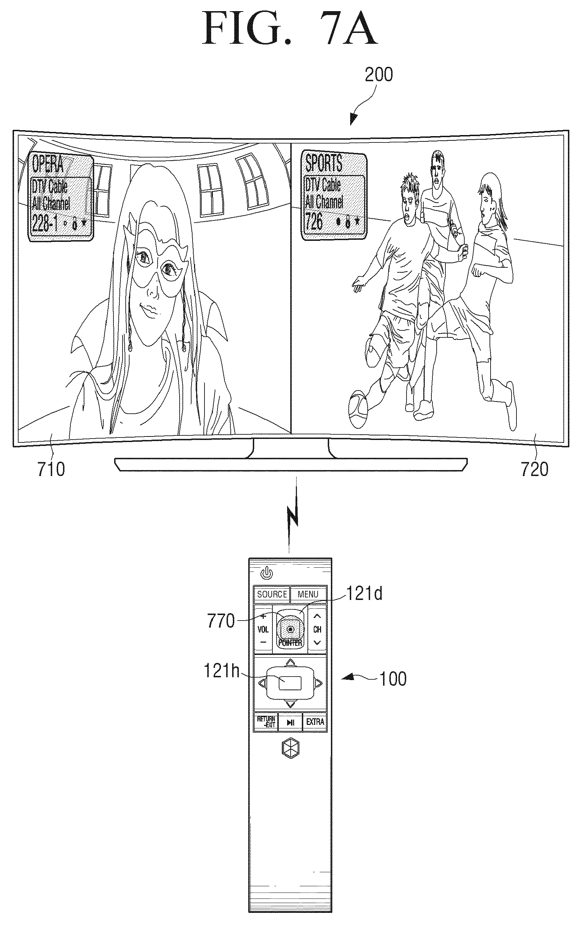

FIGS. 7A to 7K are diagrams illustrating examples regarding the method for controlling the screen of the remote controller according to an exemplary embodiment.

At S310 of FIG. 3, the broadcast may be displayed on the display apparatus.

Referring to FIGS. 4 and 7A, the display apparatus 200 may display a plurality of the broadcast screens 710 and 720 (for example, different channels of a broadcast signal) according to the control of the controller 210 at S401.

A plurality of the broadcast screens 710 and 720 may include the ground wave broadcast screen, the cable broadcast screen, the satellite broadcast screen, or the internet broadcast screen using the internet. A plurality of the broadcast screens 710 and 720 may be respectively displayed on the two-divided areas of the display apparatus 200 according to the control of the controller 210. In this embodiment, the broadcast screens 710 may correspond to an opera channel and the broadcast screen 720 may correspond to a sports channel.

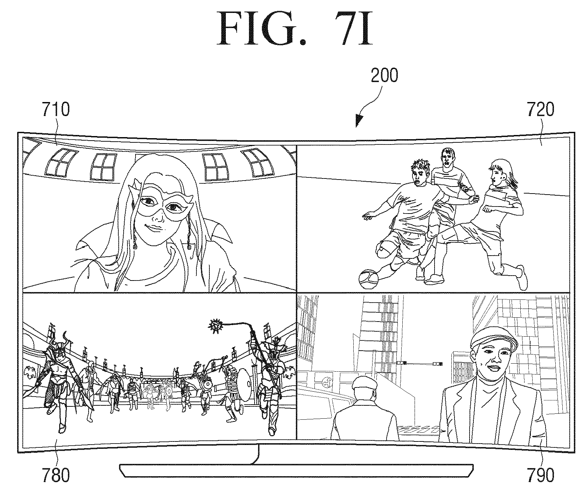

Referring to FIG. 7I, regarding the screen division (PBP, Picture by Picture) of the display apparatus 200 according to an embodiment, a plurality of the screens 710, 720, 780, and 790 may be respectively displayed on the four-divided areas of the display apparatus 200 according to the control of the controller 210. The screen division of the display apparatus 200 may be performed to be two-division, three-division, four-division, five-division or more than the above number of the division. A number of the divided screen areas may be modified correspondingly to the screen size or the screen resolution of the display apparatus 200.

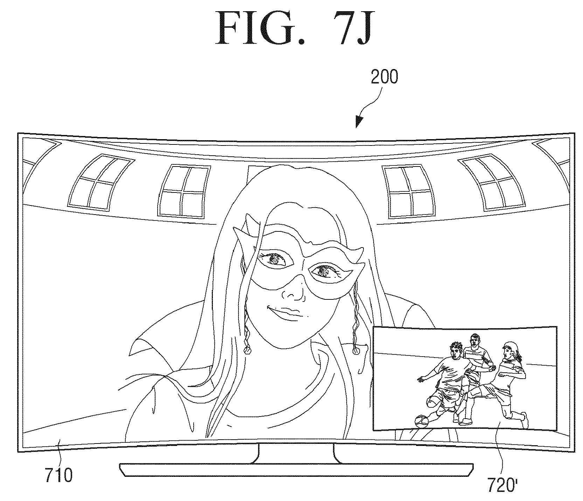

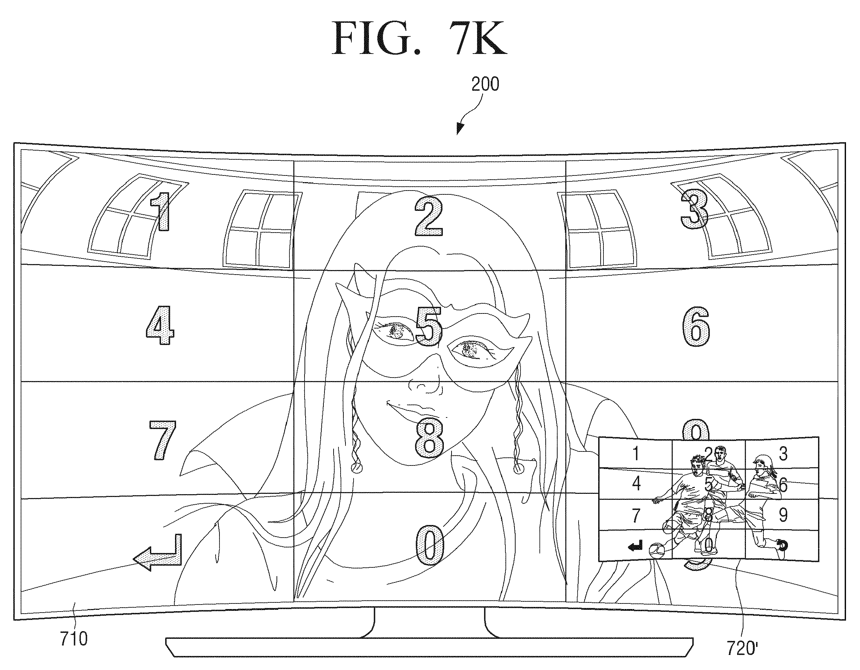

Referring to FIGS. 7J and 7K, regarding PIP (Picture in Picture) of the display apparatus 200 according to an embodiment, a smaller screen 720' may be displayed within the screen of the display apparatus according to the control of the controller 210. The controller 210 may respectively control the screen to display the virtual key pads both on the main screen and the sub screen 720'.

The size or the position of the sub screen 720' may be modified correspondingly to the screen size or the screen resolution of the display apparatus 200.

A plurality of the broadcast screens 710 and 720 may be displayed by the user input inputted through one among the key (e.g., 121k of FIG. 1µB) of the remote controller 100 and/or the panel key of the display apparatus 200. Further, a plurality of the broadcast screens 710 and 720 may be displayed by the user input inputted through the key (or button,) of the broadcast receiving device (e.g., set-top box, not illustrated) or another remote controller controlling the broadcast receiving device.

According to an embodiment, the term "user" may indicate a person who controls the function or the operation of the display apparatus 200 by using the remote controller 100, and may include a user, a manager or an install engineer.

At S320 of FIG. 3, the pointer may be displayed on the display apparatus in response to the selecting of the pointer key.

Referring to FIGS. 4 and 7A, a user may perform the eleventh inputting 770 on the pointer key 121d of the remote controller 100 in order to change the broadcast channel of the display apparatus 200 at S402. Further, a user may perform the eleventh inputting 770 on the touch pad 122 of the remote controller 100 in order to change the broadcast channel of the display apparatus 200.

The broadcast channel displayed on the display apparatus 200 may include the one digit channel number, the two digit channel number, the three digit channel number or the five digit channel number including "-." For example, referring to FIG. 7A, the broadcast channel displayed on the left screen of the display apparatus 200 may be five digit channel number, 228-1. The broadcast channel displayed on the right screen of the display apparatus 200 may be three digit channel number, 726. Further, the one digit channel number may be 7, the two digit channel number may be 11, or the three digit channel number may be 605.

The eleventh inputting 770 may include the key (or button) selecting of a user, the key (or button) pressing of a user, the key touching of a user, and the touch gestures of a user. Further, the eleventh inputting 770 may include the user voice inputted through the microphone 123 or the user motion detected by the sensor 124 (or including the movement of the remote controller 100).

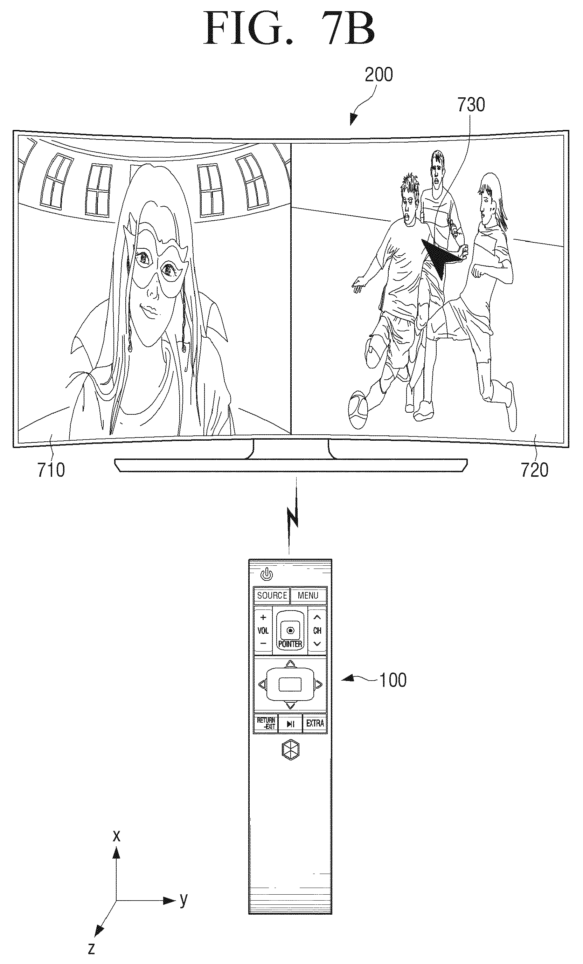

The controller 110 of the remote controller 100 may transmit the eleventh control information corresponding to selecting of the pointer key 121d to the display apparatus 200 at S403. The controller 110 of the remote controller 100 may transmit the eleventh control information corresponding to selecting of the pointer key 121d to the display apparatus 200 by using one of the communicator 130 and the optical output interface 150. The eleventh control information may be control information to display the pointer 730 of FIG. 7B on the screen of the display apparatus 200.

When the eleventh control information is transmitted through the optical output interface 150, a user may keep the eleventh inputting 770 on the pointer key 121d within a preset standby time. For example, the preset standby time may be 300 ms. The preset standby time corresponding to the eleventh control information may indicate the selecting of the pointer key 121d by a user for a longer time than the signal period from the first leader code of the remote controller code format to the consecutive second leader code. The preset standby time may be modified according to the model or the manufacturer of the remote controller 100.

When the eleventh control information is transmitted through the near field communicator (e.g., Bluetooth 132), the controller 110 of the remote controller 100 may transmit the eleventh control information in Bluetooth packet to the display apparatus 200. Bluetooth packet may include the access code (72 bit) to determine the effectiveness of the packet, the header (54 bit), and the payload (0 ∼ 2,745 bit). The access code may be used to determine the effectiveness of the packet, and the header may include MAC (media access control) address and the packet type. The payload may include the transmitted data, and may be modified in terms of the size according to the type of the transmitted packet. The transmitted eleventh control information may be included in the payload of the packet.

When the remote controller 100 and the display apparatus 200 are initially connected to each other, the controller 110 of the remote controller 100 may search the display apparatus 200 by using the near field communicator (e.g., Bluetooth 132). The controller 110 may request the inquiry and the connection page to the display apparatus 200.

The storage 180 may store the display apparatus connect information corresponding to the display apparatus 200 connected to the remote controller 100 according to the control of the controller 110. The stored display apparatus connect information may include SSID, MAC address, the operation information (e.g., busy or standby), or the context information.

The controller 110 of the remote controller 100 may transmit the eleventh control information to the display apparatus 200 by using the stored display apparatus connect information.

The items included in the display apparatus connect information may be modified, added or deleted correspondingly to the function (performance or constitution) of the display apparatus.

Referring to FIGS. 4 and 7B, the pointer may be displayed on the screen of the display apparatus 200 at S404.

The communicator 230 of the display apparatus 200 may receive the eleventh control information from the remote controller 100 according to the control of the controller 210. The display apparatus 200 may receive the eleventh control information outputted from the remote controller 100 through the communicator 230. Further, the display apparatus 200 may receive the eleventh control information outputted from the remote controller 100 through the optical receiver 250. The received eleventh control information may be stored in the storage 280 according to the control of the controller 210.

The controller 210 of the display apparatus 200 may display the pointer 730 on the screen by using the received eleventh control information. The controller 210 of the display apparatus 200 may display the pointer 730 on the screen in response to the eleventh control information. The controller 210 may display the pointer 730 on an established position of the screen of the display apparatus 200. For example, the established position may be screen center area of the display apparatus 200, one divided area among the two divided areas, one area among the four divided areas, or final pointer position previous to the eleventh inputting 770. The storage 280 may store the final pointer position according to the control of the controller 210.

If the pointer 730 needs to be displayed on the final pointer position of the screen of the display apparatus 200, the controller 210 may control the screen to display the pointer by using the final pointer position stored in the storage 280.

The size of the pointer 730 may be modified correspondingly to the display apparatus information of the display apparatus 200. For example, the size of the pointer 730 may be modified in response to the screen size or the screen resolution of the display apparatus 200. Further, the size of the pointer 730 may be modified in response to the divided screen size of the display apparatus 200 or the divided screen resolution of the display apparatus 200.

At S330 of FIG. 3, the movement of the pointer may be displayed.

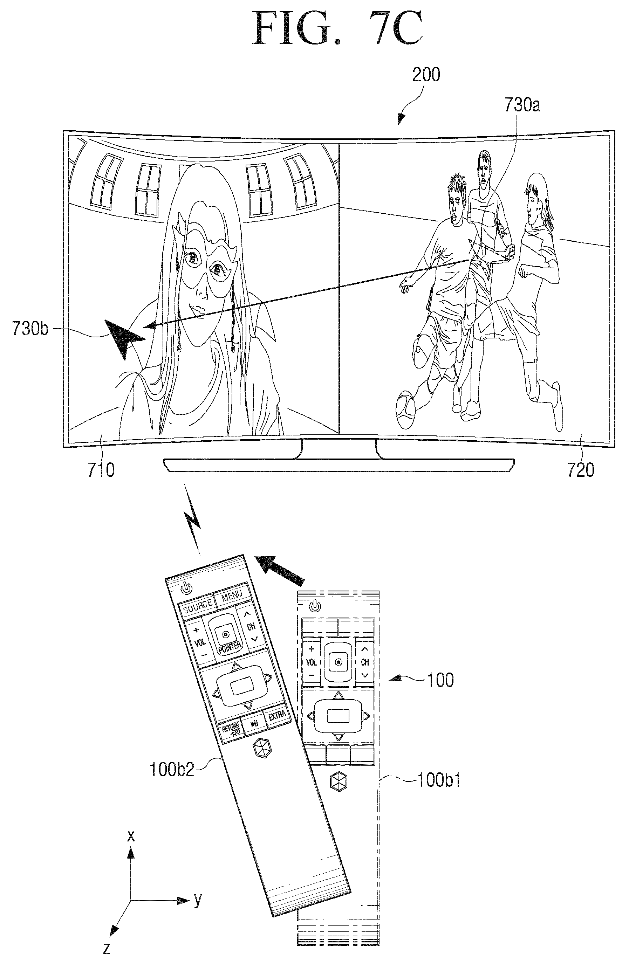

Referring to FIGS. 4 and 7C, a user may move the remote controller 100 in order to change the broadcast channel of the display apparatus 200 at S405. A user may move the remote controller 100 toward the two axes or the three axes. For example, a user may move the remote controller 100 toward X axis (e.g., horizontal direction), Y axis (e.g., vertical direction) or Z axis (e.g., rotating direction), for example, from 100b1 to 100b2. The remote controller 100 may be moved toward the three axes (e.g., X, Y and Z axes) by a user countered to the display apparatus 200. For example, the remote controller 100 may be moved toward the left lower side by a user.

The movement of the remote controller 100 may be detected by the sensor 124. The movement of the remote controller 100 may be periodically detected by the sensor 124 (e.g., time interval can be set as any value as long as the sensor 124 can detect the movement of the remote controller 100). The sensor 124 may output the analog signal detected correspondingly to the movement of the remote controller 100 to the controller 110. Further, the analog signal outputted from the sensor 124 may be converted into the digital signal by the converter. The converted digital signal may be outputted to the controller 110.

The storage 180 may store the detected analog signal or the converted digital signal according to the control of the controller 110. In the following disclosure, the stored analog signal or digital signal are named as move information. The stored move information may include the move information ID for the record management, the detected acceleration values of the remote controller 100 (e.g., two or three axes), the detected move time of the remote controller 100, and the move distance of the remote controller 100.

The move information may be periodically stored when the remote controller 100 moves from the first position 100b1 to the second position 100b2. The move information may contain multiple entries stored periodically according to the detection resolution of the sensor 124.

The controller 110 may generate the twelfth control information by using the stored move information. The controller 110 may generate the twelfth control information by using the periodically stored move information. The twelfth control information may be generated when the remote controller 100 moves from the first position 100b1 to the second position 100b2. The twelfth control information may be control information to move the pointer 730a on the two dimensional screen of the display apparatus 200.

The twelfth control information may include the two dimensional or the three dimensional control information. The two dimensional twelfth control information may be twelfth control information generated by excluding one axis from the remote controller 100. The three dimensional twelfth control information may be twelfth control information generated in response to the complete 3-axis movement of the remote controller 100. The controller 110 may transmit one of the two dimensional or the three dimensional twelfth control information as the twelfth control information to the display apparatus 200.

The controller 110 may transmit the twelfth control information to the display apparatus 200 at S406. The controller 110 may periodically transmit the twelfth control information to the display apparatus 200. Further, the controller 110 may periodically transmit the twelfth control information generated when the remote controller 100 moves from the first position 100b1 to the second position 100b2 to the display apparatus 200.

The transmitting of the twelfth control information in the remote controller 100 is substantially similar to the transmitting of the eleventh control information in the remote controller 100 and thus further illustration is omitted here.

Referring to FIGS. 4 and 7C, the moving pointer may be displayed on the screen of the display apparatus 200 at S407.

The communicator 230 of the display apparatus 200 may receive the twelfth control information from the remote controller 100 according to the control of the controller 210. The display apparatus 200 may receive the twelfth control information outputted from the remote controller 100 through the communicator 230 or the optical receiver 250. The received twelfth control information may be stored in the storage 280 according to the control of the controller 210.

The controller 210 may move the pointer 730 on the screen of the display apparatus 200 (e.g., from the first position 730a to the second position 730b) by using the received twelfth control information.

When the received twelfth control information is two dimensional twelfth control information, the controller 210 may move the pointer 730two dimensionally on the screen of the display apparatus 200 by using the received twelfth control information. When the received twelfth control information is three dimensional twelfth control information, the controller 210 may move the pointer 730 two dimensionally on the screen of the display apparatus 200 by analyzing the received twelfth control information (e.g., excluding one axis from the three axes). Or, when the received twelfth control information is three dimensional twelfth control information and when the three dimensional display is performed on the screen of the display apparatus 200, the controller 210 may move the pointer 730 three dimensionally on the screen of the three dimensional display apparatus by analyzing the received twelfth control information.

The controller 210 may move the pointer 730 from the first position 730a of the right screen to the second position 730b of left screen in response to the received twelfth control information. The controller 210 may modify the moving speed of the pointer 730 in response to the received twelfth control information. For example, when the remote controller 100 is quickly moved by a user, the controller 210 may quickly move the pointer 730 in response to the received twelfth control information. Further, when the remote controller 100 is slowly moved by a user, the controller 210 may slowly move the pointer 730 in response to the received twelfth control information.

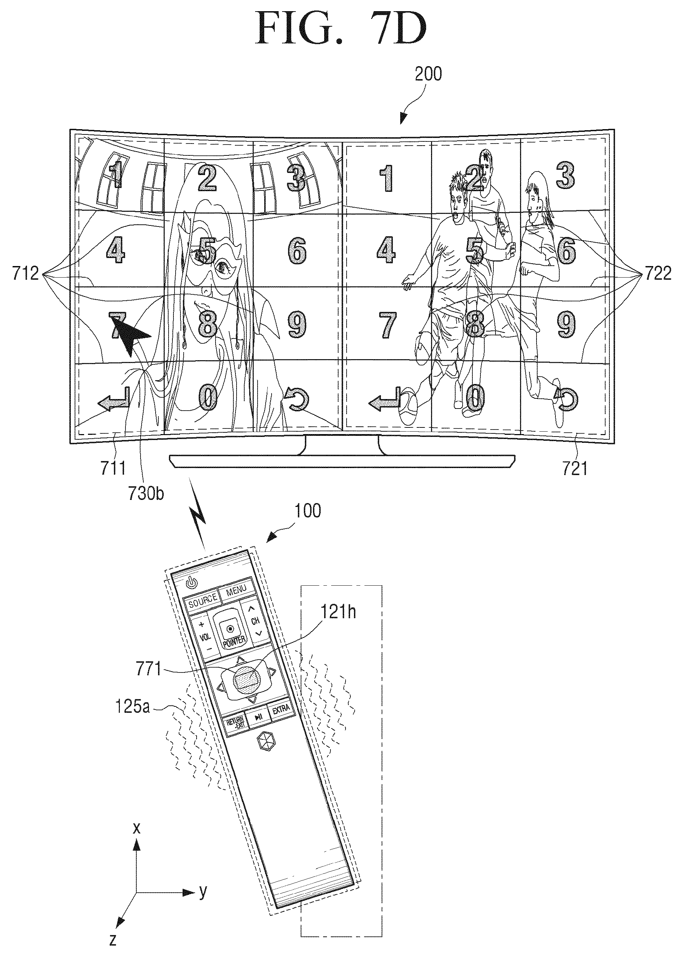

Referring to FIGS. 4 and 7D, the controller 210 of the display apparatus 200 may transmit the thirteenth control information to the remote controller 100 at S408.

While moving the pointer from the first position 730a to the second position 730b, the pointer 730 may move across the area dividing lines 712, 722 of the virtual key pads 711, 721. The virtual key pads 711, 721 may not be displayed at S330 of FIG. 3. The pointer 730 may be first displayed on the screen of the display apparatus 200, and then the virtual key pads 711, 721 may be displayed.

The controller 210 may consecutively display the virtual key pads 711 and 721 in response to the movement of the pointer 730. For example, the controller 210 may first display the virtual key pad 721 on the right screen (right divided area) of the divided display apparatus 200 in response to the movement of the pointer 730, and then display the virtual key pad 711 on the left screen (left divided area) of the divided display apparatus 200. Further, the virtual key pad 721 may be first displayed on the right screen of the divided display apparatus 200 in response to the movement of the pointer 730 while the controller 210 may not display the virtual key pad 711 when the pointer 730 moves toward the left divided screen area.

When the pointer 730 is not displayed on the screen of the display apparatus 200, the controller 210 may not control the screen to display the virtual key pads 711 and 721. Further, when the pointer 730 is first displayed on the broadcast screen of the display apparatus 200, the controller 210 may control the screen to display the virtual key pads 711 and 721. When the pointer 730 is not first displayed on the broadcast screen of the display apparatus 200, the controller 210 may not control the screen to display the virtual key pads 711 and 721. When the virtual key pads 711and 721 are not displayed, the controller 210 may not display the area dividing lines 712, 722 of the virtual key pads 711 and 721.

The virtual key pads 711 and 721 are transparent and thus may be overlapped with the broadcast screen displayed on the display apparatus 200. The transparency may be established to be 1 to 99 %, for example, by a manufacturer or a user.

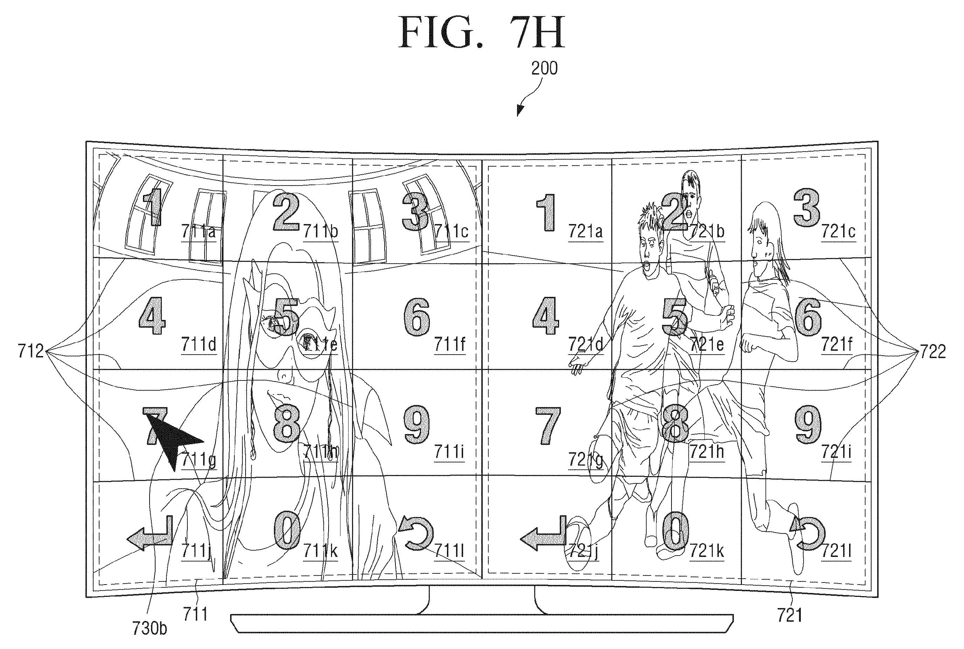

Referring to FIG. 7H, the virtual key pads 711 and 721 may respectively divide the divided left and right screen areas of the display apparatus 200 into the twelve divided areas 711a-711l and 721a-721l with the area dividing lines 712, 722. The twelve divided areas 711a-711l, 721a-721l may respectively include numbers (e.g., 1, 2, 3, ... , 0) or texts (e.g., one, two, three, ... , zero). Further, symbols (or images) may be included on the left areas 711j and 721j or the right areas 711k and 721k of the divided areas 711i, 721i.

When the pointer 730 is moved from the first position 730a to the second position 730b in response to the twelfth control information, the controller 210 may not display the virtual key pads 711, 721 on the screen of the display apparatus 200. When the pointer 730 is moved from the first position 730a to the second position 730b in response to the twelfth control information, the controller 210 may not display the area dividing lines 712, 722 of the virtual key pads 711, 721 on the screen of the display apparatus 200. When the pointer 730 approaches at the second position 730b in response to the twelfth control information, the controller 210 may not control the screen to display the virtual key pads 711, 721 on the screen of the display apparatus 200.

The controller 210 may detect that the pointer 730 moves across the area dividing lines 712 and 722 in response to the twelfth control information. Further, the controller 210 may detect a plurality of the pointer's moving across the area dividing lines 712 and 722.

When the pointer's moving across the area dividing lines 712 and 722 is detected, the storage 280 may store the information regarding the pointer's moving across the area dividing lines according to the control of the controller 210. When a plurality of the pointer's moving across the area dividing lines 712 and 722 are detected, the storage 280 may respectively store the information regarding the pointer's moving across the area dividing lines according to the control of the controller 210. Further, when a plurality of moving across the area dividing lines 712, 722 of the pointer 730 are detected, the storage 280 may respectively store the information regarding moving across the area dividing lines corresponding to a plurality of moving across the area dividing lines 712, 722 of the pointer 730 on one information regarding moving across the area dividing lines according to the control of the controller 210. The stored information regarding moving across the area dividing lines may include ID for the record management, ID for the area dividing lines where moving across of the pointer is detected, the area dividing line positions, and the area dividing line moving across time (e.g., adding the times regarding a plurality of moving across the area dividing lines when moving across is performed for plural times).

The controller 210 may generate the thirteenth control information by using the stored information regarding moving across the area dividing lines. The controller 210 may transmit the thirteenth control information to the remote controller 100 by using the communicator 230. The controller 210 may transmit the thirteenth control information repeatedly (e.g., 10 times per 5 ms, modifiable through the establishment) to the remote controller 100 by using the communicator 230. The thirteenth control information may be control information to provide tactile feedback in the remote controller 100.

The thirteenth control information may include whether to activate/deactivate the vibration component 165 of the remote controller 100, the vibration intensity of the vibration component 165, or the total vibration time of the vibration component 165. The thirteenth control information may be transmitted to the remote controller 100 by 5 ms. However, this is merely one of embodiments; the transmitting of the thirteenth control information may be modified according to the frequency of the haptic patterns. The transmitting frequency and period of the thirteenth control information may be modified. The transmission of the thirteenth control information may be periodically performed until the movement of the pointer 730 completes (e.g., approaching at the second position 730b).

Referring to FIGS. 4 and 7D, the controller 110 of the remote controller 100 may provide tactile feedback at S409.

The communicator 130 of the remote controller 100 may receive the thirteenth control information from the display apparatus 200 according to the control of the controller 110. The remote controller 100 may receive the thirteenth control information transmitted from the display apparatus 200 through the communicator 130. The received thirteenth control information may be stored in the storage 180 according to the control of the controller 110 in the remote controller 100.

The controller 110 may provide tactile feedback 125a for a preset time period by using the thirteenth control information. The preset time period may be 500 ms (e.g., modifiable through the establishment). The controller 110 may provide tactile feedback 125a (e.g., vibration intensity and total vibration time) by activating the vibration motor 125 with the stored haptic patterns. When the favorite haptic pattern is stored in the storage 180, the controller 110 may provide the favorite haptic pattern as tactile feedback 125a with the priority through the vibration motor 125.

The controller 110 may provide the auditory feedback through the speaker as well as providing tactile feedback 125a through the vibration motor 125.

At S340 of FIG. 3, the selecting of the pointer on one area among the twelve divided areas may be received.

Referring to FIGS. 4, 7D and 7H, when the pointer 730 is approaching at the second position 730b (e.g., positioned on the seventh divided area 711g of the left screen in the two-divided display apparatus 200), a user may perform the twelfth inputting 771 on the enter key 121h of the remote controller 100 in order to change the broadcast channel of the display apparatus 200 at S410. A user may perform the twelfth inputting 771 on the enter key 121h of the remote controller 100 in order to select the channel number corresponding to the broadcast channel displayed on the left screen of the display apparatus 200.

The twelfth inputting 771 may include the key (or button) selecting of a user, the key (or button) pressing of a user, the key touching of a user, and the touch gestures of a user, which are substantially similar to the eleventh inputting 710. Further, the twelfth inputting 771 may include the user voice inputted through the microphone 123 or the user motion detected by the sensor 124 (or including the movement of the remote controller 100).

Referring to FIG. 4, the controller 110 of the remote controller 100 may transmit the fourteenth control information corresponding to selecting of the enter key 121h to the display apparatus 200 at S411.

The controller 110 of the remote controller 100 may transmit the fourteenth control information corresponding to selecting of the enter key 121h to the display apparatus 200 through one of the communicator 130 and the optical output interface 150. The fourteenth control information may be control information to display the virtual key pads 711, 721 on the screen of the display apparatus 200. Further, the fourteenth control information may be control information corresponding to selecting of one area from the two-divided (or three (or more)-divided) screen of the display apparatus 200. The fourteenth control information may be control information corresponding to the operations regarding a plurality of the items (e.g., selecting one area on the divided screen and displaying the virtual key pad) to control the display apparatus 200.

The transmitting of the fourteenth control information to the display apparatus 200 is substantially similar to the transmitting of the eleventh control information to the display apparatus 200 and thus further illustration is omitted here for simplicity..

The controller 110 of the remote controller 100 may transmit the fourteenth control information to the display apparatus 200 through one of the communicator 130 and the optical output interface 150 in response to the additional selecting of the pointer key 121d as well as selecting of the enter key 121h.

At S350 of FIG. 3, the virtual key pad may be displayed on the whole screen of the display apparatus.

Referring to FIGS. 4, 5D and 7H, the communicator 230 of the display apparatus 200 may receive the fourteenth control information from the remote controller 100 according to the control of the controller 210. The display apparatus 200 may receive the fourteenth control information outputted from the remote controller 100 through one of the communicator 230 and the optical receiver 250. The received fourteenth control information may be stored in the storage 280 according to the control of the controller 210 of the display apparatus 200.

The controller 210 of the display apparatus 200 may display the virtual key pad by using the fourteenth control information at S412.

The controller 210 may control the screen to display the virtual key pads 711 and 721 in response to the fourteenth control information. The second position 730b of the pointer 730 may be positioned on the seventh divided area 711g of the virtual key pad 711 displayed in response to the fourteenth control information.

The controller 210 may control the screen to display the selection of the seventh divided area 711g by using the fourteenth control information. The controller 210 of the display apparatus 200 may distinguish the seventh divided area 711g from the other divided areas 711a-711f, 711h-711l in response to the selection of the seventh divided area 711g on the left screen of the display apparatus 200. The distinguishing of the seventh divided area 711g be accomplished by flickering, color changing of the seventh divided area 711g for a preset time period (e.g., 100 ms, modifiable through the establishment), or the color changing of the number displayed on the seventh divided area 711g, for example. Further, the distinguishing of the seventh divided area 711g may include the distinguishing of the left screen of the display apparatus 200 (e.g., flickering or color changing) and the distinguishing of the right screen of the display apparatus 200. According to an embodiment, the seventh divided area 711g may be used with the same meaning as the seventh divided area 322g.

The controller 210 may control the screen to display the seventh divided area 711g to be distinguished and may not display the virtual key pad 711. Or, when the seventh divided area 711g is displayed, the controller 210 of the display apparatus 200 may or may not display the virtual key pad 721.

The controller 210 of the display apparatus 200 may display the seventh divided area 711g, and display the virtual key pad 711 for a preset time period (e.g., 500 ms, modifiable through the establishment). Further, when the seventh divided area 711g is displayed, the controller 210 of the display apparatus 200 may or may not display the virtual key pad 721.

At S360 of FIG. 3, the number corresponding to the selected one divided area may be displayed on a cornerof the screen.

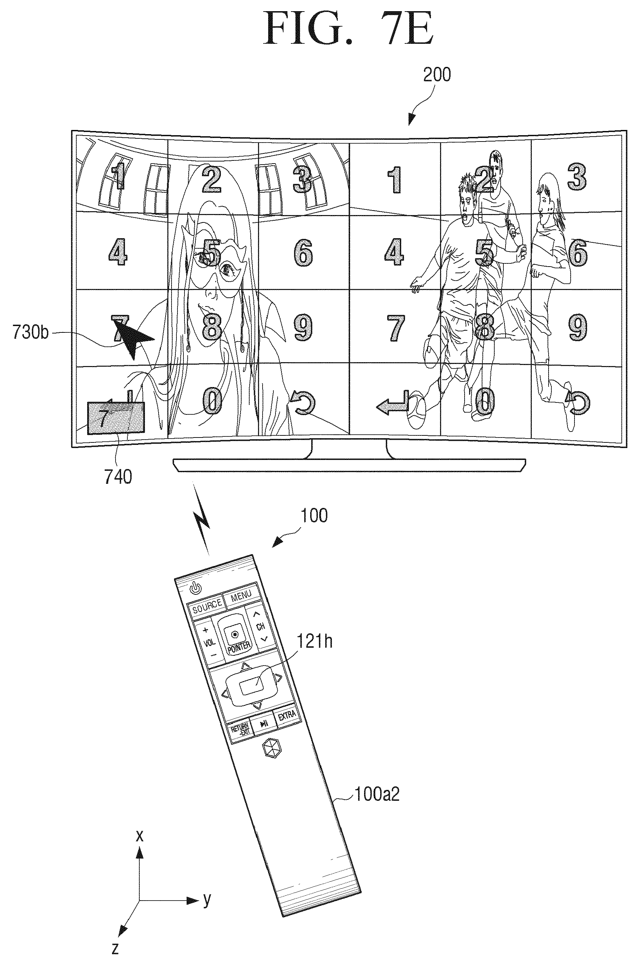

Referring to FIGS. 4 and 7E, the number corresponding to the selected one divided area may be displayed on a corner of the screen of the display apparatus 200 at S413.

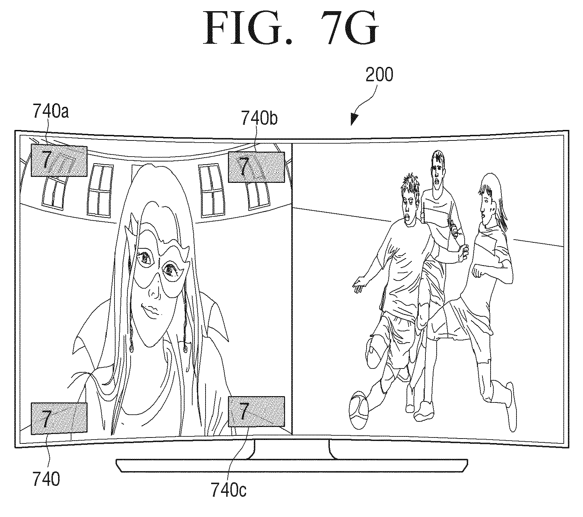

The controller 210 of the display apparatus 200 may display the number (e.g., 7) corresponding to the selected seventh divided area 711g on a corner of the screen of the display apparatus 200. The number corresponding to the seventh divided area 711g may be displayed on the pop-up window 740 on a corner among the four corners of the screen of the display apparatus 200. Referring to FIG. 7G, the pop-up window 740 may be displayed on the four corners of the screen of the display apparatus 200. Further, the pop-up window 740 may be positioned on any area of the screen of the display apparatus 200 as well as one corner of the screen of the display apparatus 200 (e.g., 740 to 740c) with the remote controller 100 or the establishment.

Because the pop-up window 330 is transparent, the pop-up window 740 may be overlapped with the broadcast screen displayed on the display apparatus 200. The transparency may be established to be 1 to 99 %, for example, by a manufacturer or a user. Further, the virtual key pads 711 and 712 and the pop-up window 740 may be overlapped with the broadcast screen of the display apparatus 200 together. The transparency of the virtual key pads 711 and 712 may be identical to or different from the transparency of the pop-up window 740.

The pop-up window 740 may have the size in which the longest broadcast channel digit number (e.g., five digit channel number) can be displayed. Further, the pop-up window 740 may have the uniform size regardless of the broadcast channel digit number that can be displayed. For example, the pop-up window displaying the one digit channel number may have the uniform size to the pop-up window displaying the five digit channel number.

The size of the pop-up window 740 may increase correspondingly to the selecting of the one divided screen area with the remote controller 100. For example, the pop-up window displaying the one digit channel number may have a smaller size than the pop-up window displaying the three digit channel number.

The position of the pop-up window 740 may be modified with the selecting of the remote controller 100 (e.g., with the key of the remote controller 100) or the establishment.

After the current broadcast channel (e.g., 228-1) is changed to the selected broadcast channel number, the controller 210 may not display the pop-up window 740.

At S370 of FIG. 3, whether to select an additional number on the virtual key pad may be determined.

The controller 210 of the display apparatus 200 may determine whether to select an additional number on the virtual key pad 711. Whether to select an additional number with the pointer 730 may be determined by considering whether to receive the additional twelfth control information corresponding to the movement of the pointer 730 from the remote controller 100 within a preset standby time (e.g., 3 sec, modifiable). Further, whether to select an additional number on the virtual key pad 711 may be determined by considering whether to receive the nineteenth control information corresponding to selecting of the key (e.g., 121j of FIG. 1µB) to delete the number displayed on the pop-up window 740 from the remote controller 100.

When the additional twelfth control information is not received within a preset standby time or when the nineteenth control information is not received, the controller 210 of the display apparatus 200 may determine that an additional number is not selected on the virtual key pad 711.

When the preset standby time passes over, the controller 210 of the display apparatus 200 may determine that an additional number is not selected on the virtual key pad 711.

The controller 210 of the display apparatus 200 may determine whether to obtain the broadcast channel corresponding to the number displayed on the pop-up window 740. For example, the broadcast channel corresponding to the number displayed on the pop-up window 740 may be 1. The controller 210 of the display apparatus 200 may compare the broadcast channel corresponding to the number displayed on the pop-up window 740 (e.g., 1) with the broadcast channel list stored in the storage 280. When there is no broadcast channel corresponding to the number displayed on the pop-up window 740 from the broadcast channel list, the controller 210 of the display apparatus 200 may standby the receiving of the additional twelfth control information from the remote controller 100.

When there is no broadcast channel corresponding to the number displayed on the pop-up window 740 from the broadcast channel list, the controller 210 of the display apparatus 200 may request the transmitting of the additional twelfth control information to the remote controller 100. The request for transmitting of the additional twelfth control information may be embodied as a sound through the speaker of the remote controller 100 or tactile feedback.

At S370 of FIG. 3, when the control information corresponding to selecting of the additional number is received from the remote controller 100, S320 and S330 of FIG. 3 may be performed.

At S370 of FIG. 3, when the controller 210 of the display apparatus 200 determines that an additional number is not selected, S380 of FIG. 3 may be performed.

At S380 of FIG. 3, the broadcast channel corresponding to the number displayed on the pop-up window may be displayed.

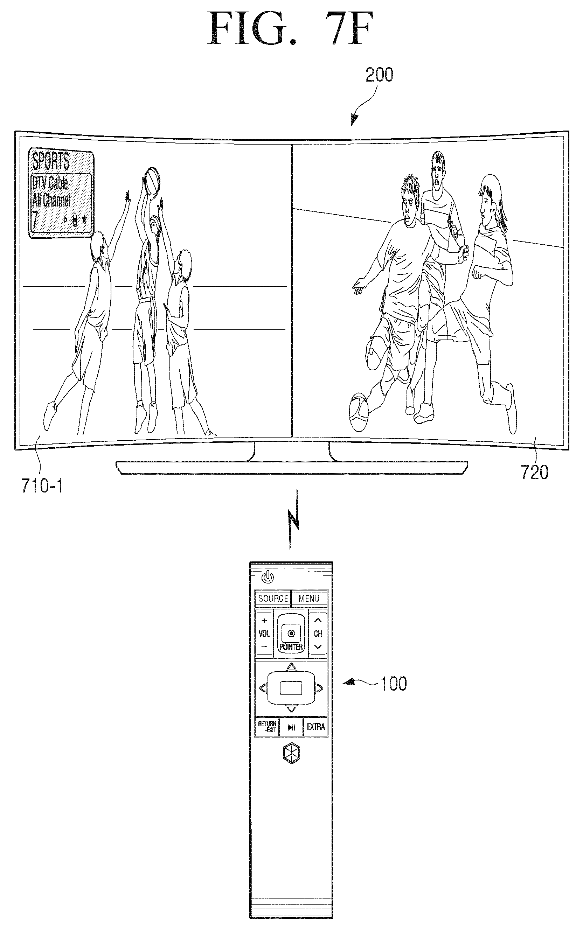

Referring to FIGS. 4 and 7F, the channel may be changed to the broadcast channel corresponding to the number displayed on the pop-up window 740 at S414. The controller 210 of the display apparatus 200 may change the broadcast channel (e.g., 228-1) into the broadcast channel (e.g., 7) corresponding to the number displayed on the pop-up window 740. The displayed broadcast channel (e.g., 7) may be a sports channel (e.g., basketball game 710-1).

The controller 210 of the display apparatus 200 may provide at least one of the auditory feedback (e.g., through the speaker) and the visual feedback (e.g., through the display 270) in response to the changing of the broadcast channel (e.g., 7).

At S380 of FIG. 3, when the broadcast channel corresponding to the number displayed on the pop-up window 740 is displayed on the screen of the display apparatus 200, the method for controlling the screen of the remote controller may complete.

Back to S370 of FIG. 3, when the control information corresponding to selecting of the additional number is received from the remote controller 100, S320 and S330 of FIG. 3 may be performed.

The selecting of the additional number by the two-divided display apparatus 200 is substantially similar to the selecting of the additional number in FIGS. 6A to 6D and thus further illustration is omitted here.

The methods according to the above various embodiments may be implemented to be program command format that can be run through the various computing means, and recorded on non-transitory computer readable recording medium.

Non-transitory computer readable recording medium indicate medium which store data semi-permanently and can be read by devices, not medium storing data temporarily such as register, cache, or memory. Specifically, the above various applications or programs may be stored and provided in non-transitory computer readable recording medium such as CD, DVD, hard disk, Blu-ray disk, USB, memory card, or ROM.

Further, the foregoing exemplary embodiments and advantages are merely exemplary and are not to be construed as limiting the exemplary embodiments. The present teaching can be readily applied to other types of apparatuses. Also, the description of the exemplary embodiments is intended to be illustrative, and not to limit the scope of the invention as defined by the claims.

## Claims

1. A remote controller, comprising:
a first key configured to cause a pointer to appear on a screen of a display apparatus;
a second key configured to cause one divided area to be selected among a plurality of divided areas of the display apparatus;
a sensor configured to detect a movement of the remote controller;
a communicator connected with the display apparatus; and
a controller configured to control the first key, the second key, the sensor and the communicator,
wherein the controller transmits a first control information corresponding to pressing of the first key, a second control information corresponding to the movement of the remote controller, and a third control information corresponding to pressing of the second key, to the display apparatus.

2. The remote controller of claim 1, further comprising an optical output interface,
wherein the controller transmits one control information among the first, the second, and the third control information to the display apparatus through the optical output interface or through the communicator.

3. The remote controller of claim 1 or 2, wherein the controller is capable of transmitting the third control information once or for plural times to the display apparatus, and
a number of times of transmitting the third control information corresponds to a digit number of a broadcast channel number of the display apparatus.

4. The remote controller of claim 1, 2 or 3, wherein the controller provides at least one of tactile feedback and auditory feedback in response to the pointer's moving across area dividing lines which divide the screen of the display apparatus into the plurality of the divided areas.

5. The remote controller of any one of the preceding claims, wherein the remote controller provides the first key and the second key as a same physical button.

6. A method for controlling a screen of a display apparatus by using a remote controller, comprising:
transmitting, to the display apparatus, a first control information corresponding to selecting of a first key which causes a pointer to appear on the screen of the display apparatus;
transmitting, to the display apparatus, a second control information corresponding to a movement of the remote controller which causes the pointer to move; and
transmitting, to the display apparatus, a third control information corresponding to selecting one divided area with the pointer among a plurality of divided areas which virtually divide the whole screen of the display apparatus,
wherein the plurality of divided areas correspond to numbers displayed on the screen of the display apparatus.

7. The method of claim 6, further comprising receiving a fourth control information from the display apparatus,
wherein the receiving the fourth control information comprises receiving the fourth control information corresponding to the pointer's passing across the area dividing lines which divide the screen into the plurality of dividing regions.

8. A display apparatus, comprising:
a display configured to output a broadcast;
a communicator configured to receive a first control information, a second control information and a third control information from a remote controller; and
a controller configured to control the display and the communicator,
wherein the controller displays a pointer on the display in response to the received first control information, and moves the displayed pointer in response to the received second control information so that one divided area is selected among a plurality of divided areas which virtually divide the display in response to the received third control information.

9. The display apparatus of claim 8, wherein the controller transmits a fourth control information corresponding to moving of the pointer across area dividing lines which divide the display into the plurality of divided area, to the remote controller through the communicator.

10. The display apparatus of claim 9, wherein the controller transmits the fourth control information to the remote controller through the communicator in response to a number of times the pointer moves across the area dividing lines.

11. The display apparatus of claim 8, 9 or 10, wherein, in response to the third control information, the controller displays a virtual key pad comprising the plurality of divided areas and the area dividing lines, to overlap with the broadcast on the display.

12. The display apparatus of any one of claims 8 to 11, wherein the controller displays a pop-up window comprising a number corresponding to the one selected divided area on the display, and
when the divided area is selected for plural times, a number having multiple digits is displayed on the pop-up window.

13. The display apparatus of claim 12, wherein the controller changes into the broadcast channel corresponding to the number displayed on the pop-up window.

14. The display apparatus of claim 13, wherein the controller receives the third control information for a number of times corresponding to a digit number of the number displayed on the pop-up window.

15. The display apparatus of claim 12,13 or 14, wherein the controller provides one feedback among auditory feedback and visual feedback in response to displaying of the broadcast channel.
